(19) Europäisches Patentamt
European Patent Office
Office européen des brevets

(11) **EP 1 814 111 A1**

(12) **EUROPEAN PATENT APPLICATION**
published in accordance with Art. 158(3) EPC

(43) Date of publication:
**01.08.2007 Bulletin 2007/31**

(51) Int Cl.:
*G11B 7/0045* (2006.01)    *G11B 7/005* (2006.01)
*G11B 7/24* (2006.01)    *G11B 20/10* (2006.01)

(21) Application number: **05795852.2**

(22) Date of filing: **20.10.2005**

(86) International application number:
**PCT/JP2005/019310**

(87) International publication number:
**WO 2006/043632 (27.04.2006 Gazette 2006/17)**

(84) Designated Contracting States:
**DE FR GB**

(30) Priority: **20.10.2004 JP 2004305456**

(71) Applicant: **MATSUSHITA ELECTRIC INDUSTRIAL CO., LTD.**
**Osaka 571-8501 (JP)**

(72) Inventor: **KOBAYASHI, Yoshiharu**
**Matsushita Electr.Industr.**
**Chuo-ku, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **RECORDING DEVICE, REPRODUCING DEVICE, AND RECORDING/REPRODUCING DEVICE**

(57) An apparatus according to the present invention includes a write compensation section, which generates a write signal to write information on an information storage medium, and a writing section for irradiating the information storage medium with a pulsed beam based on the write signal generated by the write compensation section. The information storage medium includes a recording layer, which has an optical constant that changes continuously with the total quantity of light received. The writing section radiates and condenses multiple pulsed beams on the recording layer at an interval that is shorter than the diameter of the pulsed beams on the recording layer. The write compensation section generates the write signal such that the each sum of variations in the optical constant at each irradiated spot of the pulsed beam on the recording layer through the end of a write operation forms a predetermined variation pattern.

FIG.7

EP 1 814 111 A1

**Description**

## TECHNICAL FIELD

The present invention relates to an apparatus for reading and/or writing information from/on an information storage medium.

## BACKGROUND ART

To increase the storage capacity of an optical disk medium, which is one of various types of information storage media, it is effective to increase the numerical aperture of the objective lens and shorten the wavelength of the laser beam. This is because the size of a condensed laser beam spot is inversely proportional to the numerical aperture of an objective lens and directly proportional to the wavelength of the laser beam. That is why if the numerical aperture of the objective lens is increased and if the wavelength of the laser beam is shortened, the size of the condensed laser beam spot can be decreased and read/write operations can be done with marks and spaces of reduced lengths. Such a method of writing information with the mark/space widths varied is called a pulse width modulation (PWM) recording.
Hereinafter, conventional methods for reading/writing information from/on an optical disk medium will be described with reference to the accompanying drawings.

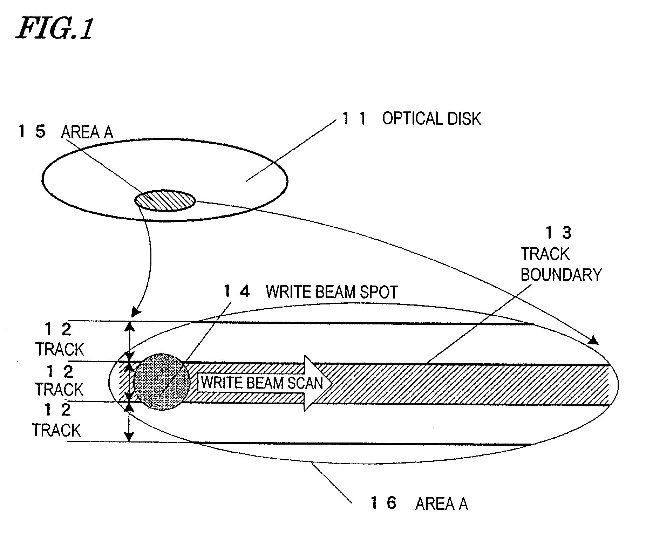

FIG. **1** shows a conventional method of writing to an optical disk medium. The optical disk medium **11,** which is any conventional optical disk medium, includes either concentric or spiral tracks **12** as shown in the enlarged view **16** of an area A **15**. Supposing the shaded track **12** in FIG. **1** is a target track of a write operation, the optical disk medium **11** is spinning such that the write beam spot **14** moves along that track **12.** The write operation is performed by changing the light intensities of the write beam spot **14** with a write signal. In FIG. **1,** the write beam spot **14** is illustrated as moving on the stilled optical disk medium **11** for the sake of simplicity. However, this situation is substantially the same as a situation where the write beam spot **14** is stopped and the optical disk medium **11** is moving. In the following description, the beam spot is supposed to move on a fixed optical disk medium for the sake of simplicity.
Such a method of writing using a beam spot works like a sort of low pass filtering because the condensed spot has a finite size. That is to say, the higher the frequency of the recording signal (i.e., the smaller the marks or spaces to be record), the more difficult it is to get the write operation done accurately. That is why in a conventional optical disk medium, to increase the recording density, the write data is converted into a run-length limited code, thereby making the lengths of the marks and spaces to be record greater than one bit and trying to get the write operation done using a write signal with as low frequency as possible. Such a code adapted to write properties is called a "recording code".

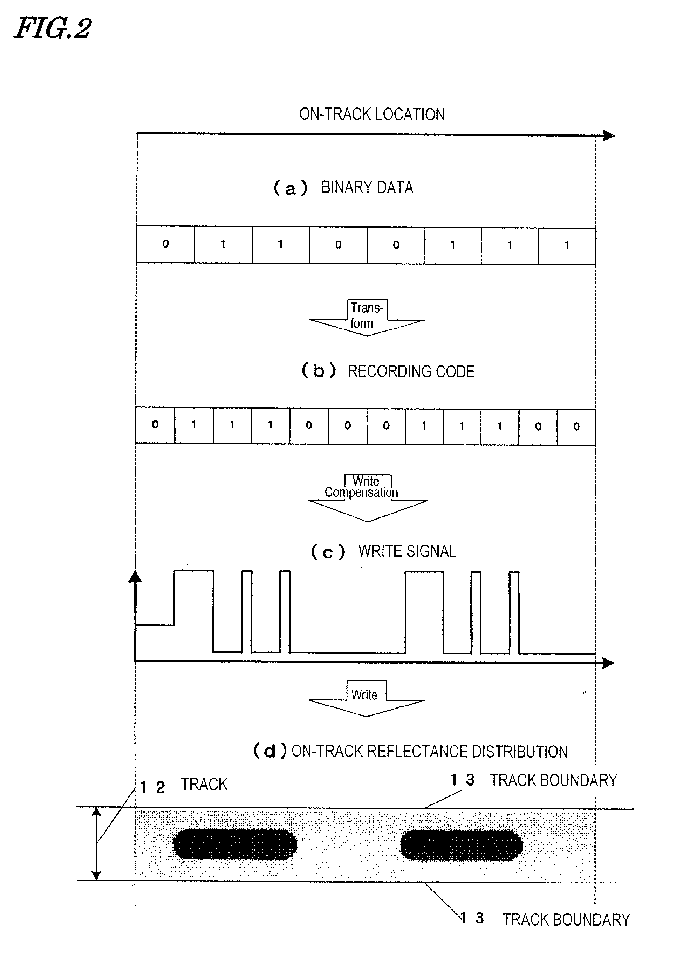

FIG. **2** shows the procedure of data conversion when data is written on a conventional optical disk medium. In portions **(a)** through **(d)** of FIG. **2,** the abscissa represents the location on the track. The locations on the track are aligned with each track. The binary data shown in portion **(a)** of FIG. **2** represents the data to be written. To decrease the frequency of the write signal, the binary data shown in portion **(a)** of FIG. **2** is converted into the recording code shown in portion **(b)** of FIG. **2,** i.e., the run-length limited code, as described above. In this example, two bits of the binary data are converted into three bits of the recording code and the minimum run length is supposed to be two. If the length of one bit of the binary data is B, the minimum run length of the recording code is 1.33 B, thus decreasing the recording frequency compared to the recording frequency where data is stored as the binary data.
In converting the recording code shown in portion **(b)** of FIG. **2** into that shown in portion **(c)** of FIG. **2,** write compensation is made. For example, in a thermal recording operation such as phase change recording, if the data represented by the recording code is stored as it is as the intensity of the write beam without making write compensation, then marks or spaces that are either larger or smaller than those of the recording code will be record on the track due to the propagation of the heat. Or if the heat is accumulated, then the marks will have an increased width. To avoid those phenomena, the width of the write signal may be increased or decreased with the expected increase or decrease of the marks or spaces lengths taken into account in advance. Alternatively, to avoid the accumulation of the heat, the write signal may have a rectangular waveshape with a decreased duty. Such processing of generating a write signal based on a recording code to perform a write operation as accurately as possible is called "write compensation". Especially as the recording density required goes higher and higher, it becomes increasingly necessary to get the write operation done as accurately as possible. That is why the write compensation is a must as far as high-density writing is concerned.
By controlling the light intensity of the write beam spot with the write-compensated write signal and moving such a write beam spot, data is written on the track. Considering a single location on the track of the recording layer, that single location is irradiated with pulsed beams a number of times. The temperature at that location rises every time the location is irradiated with the pulsed beam. And if the sum of the temperature increases exceeds the threshold value of the phase change material, the reflectance changes at that location. Otherwise, the reflectance does not change. That is to say, the reflectance at that location has one of two values depending on whether the sum of the temperature increases has exceeded the threshold value or not.

The pattern shown in portion **(d)** of FIG. **2** shows the distribution of reflectances on the track of the optical disk medium in a situation where data has been written on the phase change recording layer with the write signal shown in portion (c) of FIG. **2**, i.e., the distribution of reflectances on the track that was subjected to the PWM recording. In this case, by being irradiated with the write beam, crystalline portions of the phase change recording layer turn into amorphous portions and the reflectance changes there. That is why there are just two reflectances.

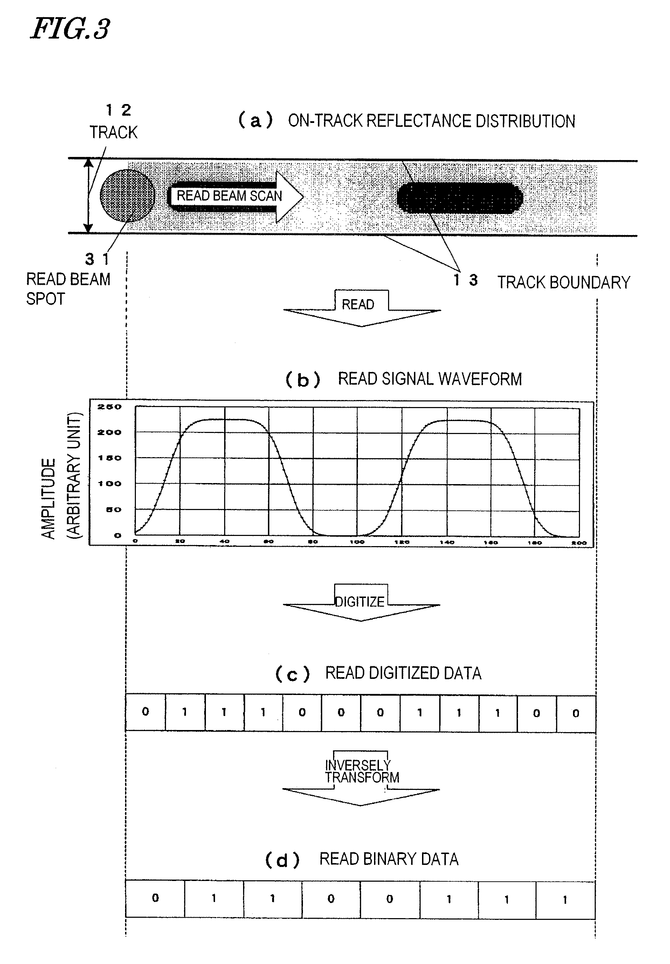

FIG. **3** shows how to read the data that was written as shown in FIG. **2**. The pattern shown in portion **(a)** of FIG. **3** is the same as that shown in portion **(d)** of FIG. **2** and shows the reflectance pattern of the track that was subjected to the PWM recording. By scanning this track with a read beam spot **31** and detecting the reflected light, the read signal shown in portion **(b)** of FIG. **3** is obtained.

As described above, the read signal has had its high frequency components attenuated. That is why after its high frequency components have been amplified with a cosine equalizer, for example, its signal levels are determined to be zero or one, i.e., digitized. The digitization is realized by setting a predetermined slice level or by performing most likelihood decoding by PRML, for example. A PLL circuit for comparing the phases of a VCO with respect to the edges of the digitized signal generates a read clock signal. And by sampling the digitized signal with the read clock signal generated, the read digitized data shown in portion (c) of FIG. 3 can be obtained.

The read digitized data is converted inversely to that of the write operation, i.e., the recording code is converted into binary data, thereby obtaining the read binary data shown in portion **(d)** of FIG. **3.**

Meanwhile, a method for increasing the recording density differently from the approach adopted in the conventional optical disk medium described above, i.e., the PWM method in which zeros and ones of digital data are recorded as marks and spaces, has also been proposed. An analog recording method has also been suggested. For example, according to Patent Document No. 1, a master for an optical disk medium is made by cutting track grooves as the modulated recording data, and the track groove shapes of the optical disk medium, transferred from the master, are recognized, thereby reading and writing data.

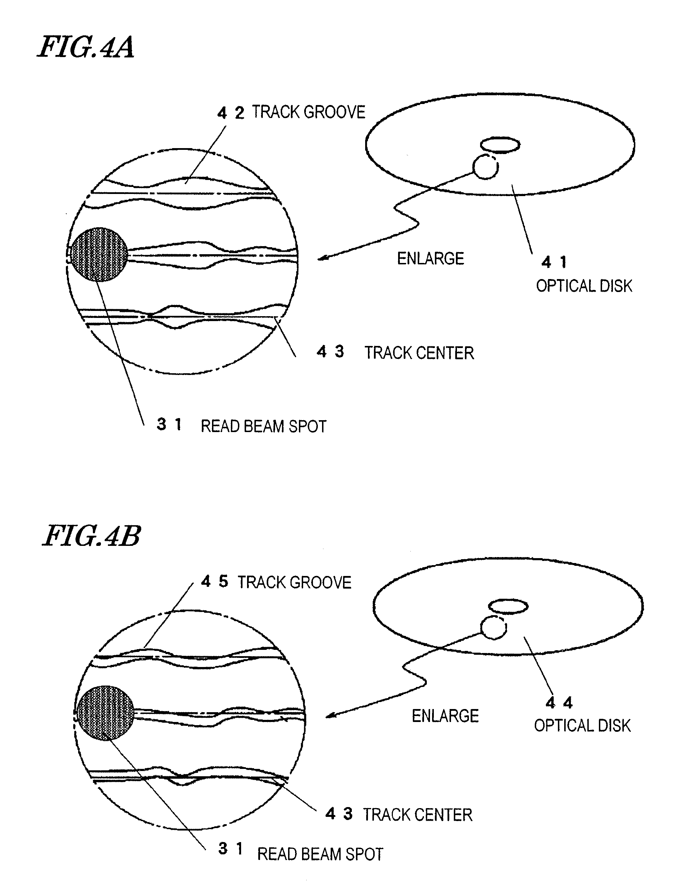

FIG. **4A** illustrates the shapes of track grooves with modulated widths on the optical disk medium disclosed in Patent Document No. 1. The track grooves **42** have their track widths changed symmetrically with respect to the centerline **43** of the tracks. A master having such track grooves **42** can be obtained by cutting the base material with a cutting beam, of which the intensity is modulated with a write signal obtained from recording data. A stamper is made from that master and used to make the optical disk medium **41** by a pressing process. If the centerline **43** of the tracks on the optical disk medium **41** is scanned with a read beam spot **31**, the first-order diffracted light of a reflected portion of the read beam spot **31** has its intensity changed with the widths of the track grooves. As a result, the intensity of the totally reflected light also changes and the widths of the track grooves can be detected by the amplitude of the reflected light detection signal according to Patent Document No. 1.

FIG. **4B** illustrates an optical disk medium **44** of which the track grooves are modulated so as to be shifted radially as also disclosed in Patent Document No. 1. The track grooves **45** are just shifted radially with respect to the centerline **43** of the tracks without changing their width. A master having such track grooves **45** can be obtained by cutting the base material with a cutting beam, of which the beam spot is shifted radially with respect to the centerline of the tracks. A stamper is made from that master and used to make the optical disk medium **44** by a pressing process. The centerline **43** of the tracks on the optical disk medium **44** is scanned with a read beam spot **31**, and the reflected light is detected by a photodetector, of which the photosensitive area has been divided into two in the radial direction. As the track grooves **45** shift radially, the differential signal of the detector that has had its photosensitive area divided into two (i.e., a differential tracking signal of a push-pull tracking type) changes. Consequently, the radial shift of the track grooves can be detected with the differential signal according to Patent Document No. 1.

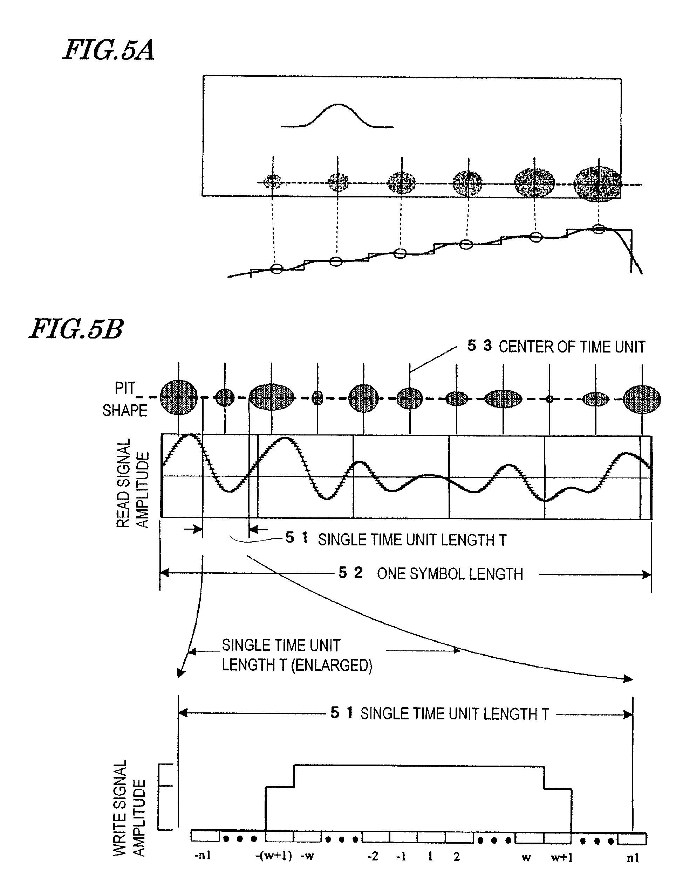

Another example, different from the simple PWM recording, is disclosed in Patent Document No. 2, which teaches a method of writing a signal by orthogonal frequency division multiplexing with the PWM and pulse amplitude modulation (PAM) methods combined. FIG. **5A** shows an exemplary application of the PAM method to an optical disk medium. As shown in the upper portion of FIG. **5A,** the write beam of an optical disk medium usually has a Gaussian illumination distribution. In a normal optical disk medium that performs thermal recording as in a magneto-optical disk or a phase change disk, if a write operation is carried out at regular intervals using an impulse write beam as shown in the upper portion of FIG. **5A** and with the impulse height increased, the pits to be record on the optical disk medium increase their sizes as the impulse height becomes higher as shown in the middle portion of FIG. **5A.** The sizes of the pits increase in not just the tracking direction but also the radial direction. And if the pit pattern shown in the middle portion of FIG. **5A** is irradiated with a read beam with a constant intensity, a stepped read signal such as that shown in the lower portion of FIG. **5A** can be obtained. As a result, the intensity of the read signal becomes a function of the impulse height of the write signal, thus realizing the PAM method.

FIG. **5B** is an example in which the PWM and PAM methods disclosed in Patent Document No. 2 are applied to an optical disk medium. The upper portion of FIG. **5B** shows the shapes of pits that are left when a write operation is performed using the PWM and PAM methods in combination. When such a sequence of pits is read by being irradiated with a read beam, a read signal compliant with the orthogonal frequency division multiplexing is generated as shown in the middle portion of FIG. **5B.** The pits in the upper portion of FIG. **5B** are left so as to represent a write signal, which is divided into multiple intervals, each having a time unit length **T** as shown in the lower portion of FIG. **5B.** A single time unit length **T** is further divided into a number $n1 \times 2$ sections. By controlling the width w of the center portion and the height **a** of the end portions with a symmetrical square wave with a length of 2w located at the center of the time unit length and interposed between signals with a width of 1/nl and the height **a,** the pits in the upper portion of FIG. **5B** are formed.

Patent Document No. 1: Japanese Patent Application Laid-Open Publication No. 11-316951
Patent Document No. 2: United States Patent application Publication Ser. No. 2004/0125732

## DISCLOSURE OF INVENTION

## PROBLEMS TO BE SOLVED BY THE INVENTION

These recording methods, however, have the following problems.

Specifically, according to the conventional methods for optical disk media, the technique of increasing the storage capacity, represented by the recording density in the PWM recording, by decreasing the spot size of a laser beam is about to reach the limit. As for BDs (Blu-ray discs), for example, the laser beam should have a wavelength of 405 nm and the objective lens should have a numerical aperture of 0.85. In order to further shorten the laser wavelength to increase the storage capacity, an ultraviolet laser beam will be needed but nobody knows when such a laser beam is available for use in actual products. Also, if the numerical aperture were set greater than 0.85, then a lens with such an NA would not only be hard to make perfectly but also have to be attached with much stricter accuracy. Furthermore, if the numerical aperture exceeded one, then a near-field recording should be performed using an immersion lens, not an ordinary lens. Each of these requirements is very hard to realize. That is why the technique of increasing the recording density by decreasing the laser beam spot has almost reached its limit.

Also, the efficiency of converting binary data to be written into a run-length limited code is 2:3 according to the RLL (1, 7) code for use in BDs and 8:16 according to the 8/16 code for use in DVDs. These conversion efficiencies are not so good, which is one of the reasons for the insufficient increase in recording density. The data shown in portions **(a)** and **(b)** of FIG. **2** is converted at a conversion ratio of 2:3 with a minimum run length of 2, which is an example of the RLL (1, 7) code for use in BDs.

Furthermore, the read digitized data may have errors. It is known that if the data shown in portion **(c)** of FIG. **3** and being converted into the data shown in portion **(d)** of FIG. **3** (i.e., the digitized data being converted into the binary data inversely to the conversion during the write operation) has errors, then the resultant binary data will have an increased number of errors to deteriorate the error rate. Such a phenomenon is called "error propagation".

Next, according to the method of Patent Document No. 1, either the width or the radial location of a track groove is changed with a signal, obtained by modulating the amplitude of write data, thereby recording write data on a master. That is to say, the master of an optical disk medium is made by cutting the track grooves with the modulated signal and the optical disk medium is formed with a stamper made of the master. However, such cutting should be done too accurately to be performed by an optical disk drive. For example, to eliminate external vibrations, the drive itself should be insulated dynamically from the outside world with a servo bench, for example. Besides, as the tracking needs to be subjected to open control, an accurate head feeding mechanism is required. What is more, the degree of planarity of the optical disk medium used and the accuracy of mounting it on the motor should also be sufficiently high. For these reasons, an optical disk drive that can perform read/write operations cannot do such cutting.

Furthermore, the radial shift of a track groove is very small in a normal optical disk system because the shift affects the tracking control. That is why the signal amplitude cannot be so large as to realize a high SNR, and not so much information can be stored. In the wobbled groove of a DVD-RAM, the track groove is also shifted radially as in the method of Patent Document No. 1. In DVD-RAMs, the grooves are shifted radially with respect to the centerline of the tracks. According to chapter 19.5 of the ECMA-33 standard, the magnitude of a wobble signal representing this groove shift is defined to be 5% to 10% of that of a tracking differential signal. This signal amplitude is very small.

Also, if the width of a track groove were changed, then the tracking signal itself would be modulated and the tracking control should be affected. That is why the track groove width cannot be changed significantly. As a result, the signal amplitude cannot be so large as to realize a high SNR, and not so much information can be stored.

According to the method of Patent Document No. 2, a single time unit length **T** is further divided into $n1 \times 2$ sections as shown in FIG. **5B**, and therefore, a PWM recording accuracy needs to be at least equal to $T/(n1 \times 2)$. This is because the length $T/(n1 \times 2)$ (which will be referred to herein as "division length") needs to be equal to one bit length of the recording code of the PWM recording.

For example, suppose data for four sub-channels (i.e., 16 bits) needs to be written in a single symbol by 16 QAM modulation. The waveform of 16 QAM needs to have 16 levels in the amplitude direction. Also, supposing there are four sub-channels, the amplitude could be increased fourfold at most, recording will be performed in 64 gray scales (=16 gray scales $\times$ 4), and n1 = 64. Therefore, the time unit length **T** is divided into 66 (=64 + 2) sections, where the last two bits added correspond to the data with the height **a** at both ends of the time unit length. Since one division length corresponds to one bit of the PWM recording code, one time unit length **T** will be 66 bits $\times$ 74.5 nm = 4917 nm supposing that recording can be done as accurately as on a BD. This length is much greater than the beam spot size of approximately 582 nm in a BD system. One time unit length **T** is preferably approximately several times as large as the beam spot size. If one time unit length **T** needs to be twice as large as the beam spot size, the one time unit length **T** should be approximately equal to 582 nm $\times$ 2/4917 nm $\fallingdotseq$ 1/4.2. Thus, one division length (T/(n1 $\times$ 2)) should be 74.5 nm/4.2 = 17.7 nm, at which recording cannot be done. If the number of gray scales is decreased to a fourth, then the division length will be approximately equal to one bit length on the recording code of a BD. However, the number of sub-channels will be one and only four bits can be written per time unit length **T**, which is no different from the recording density of a BD.

Consequently, according to the writing method of Patent Document No. 2, the recording density realized will be at most equal to, or even lower than, that achieved by the PWM method.

In order to overcome the problems described above, an object of the present invention is to increase the recording density of an information storage medium.

## MEANS FOR SOLVING THE PROBLEMS

An apparatus according to the present invention includes a write compensation section, which generates a write signal to write information on an information storage medium, and a writing section for irradiating the information storage medium with a pulsed beam based on the write signal generated by the write compensation section. The information storage medium includes a recording layer, which has an optical constant that changes continuously with the total quantity of light received. The writing section radiates and condenses multiple pulsed beams on the recording layer at an interval that is shorter than the diameter of the pulsed beams on the recording layer. The write compensation section generates the write signal such that the each sum of variations in the optical constant at each irradiated spot of the pulsed beam on the recording layer through the end of a write operation forms a predetermined variation pattern.

In one preferred embodiment, the optical constant is a refractive index.

In this particular preferred embodiment, the refractive index varies in response to a two-photon absorption reaction of the material of the recording layer, and the probability of the two-photon absorption reaction is proportional to the square of the intensity of the pulsed beam.

In an alternative preferred embodiment, the refractive index varies as the molecules of the recording layer change their directions perpendicularly to the plane of polarization of the pulsed beam, and the probability of change of the directions of the molecules is proportional to the square of the intensity of the pulsed beam.

In another alternative preferred embodiment, the refractive index varies in response to a one-photon absorption reaction of the material of the recording layer, and the probability of the one-photon absorption reaction is proportional to the intensity of the pulsed beam.

In another alternative preferred embodiment, the refractive index varies as the molecules of the recording layer change their directions perpendicularly to the plane of polarization of the pulsed beam, and the probability of change of the directions of the molecules is proportional to the intensity of the pulsed beam.

In a specific preferred embodiment, the material is diarylethene.

In another specific preferred embodiment, the recording layer includes photoaddressable polymers (PAPs).

In still another preferred embodiment, the apparatus further includes a modulating section for generating a signal representing the information by combining a plurality of sub-channel signals with each other. The information is written on the basis of a symbol with a predetermined length. A difference in frequency between carrier signals of the sub-channel signals is an integral multiple of the product of the spatial frequency of the symbol and a relative velocity of a beam spot with respect to the information storage medium.

In this particular preferred embodiment, the sub-channel signals have been subjected to phase modulation and the number of phase divisions is defined for each said sub-channel.

In an alternative preferred embodiment, the sub-channel signals have been subjected to orthogonal amplitude modulation and a signal point is set for each said sub-channel.

In another alternative preferred embodiment, the write compensation section generates the write signal such that there is a non-recorded area with a predetermined length between the symbols.

In a specific preferred embodiment, the write compensation section generates the write signal such that the non-recorded area is located between areas irradiated with a pulsed beam with prescribed power.

In yet another preferred embodiment, the information storage medium includes a plurality of recording layers including the recording layer.

Another apparatus according to the present invention is designed to generate a write signal to write information on an optical disk medium in the cast of use in an optical disk drive for writing data on the optical disk medium. The optical disk drive includes a writing section for irradiating the optical disk medium with a pulsed beam based on the write signal. The optical disk medium includes a recording layer, which has an optical constant that changes continuously with the total quantity of light received. The writing section radiates and condenses multiple pulsed beams on the recording layer at an interval that is shorter than the diameter of the pulsed beams on the recording layer. And the apparatus generates the write signal such that the each sum of variations in the optical constant at each irradiated spot of the pulsed beam on the recording layer through the end of a write operation forms a predetermined variation pattern.

A writing method according to the present invention includes the steps of: generating a modulation signal to write encoded information on an information storage medium; and irradiating the information storage medium with a pulsed beam based on the write signal generated by a write compensation section. The information storage medium includes a recording layer, which has an optical constant that changes continuously with the total quantity of light received. The step of irradiating includes radiating and condensing multiple pulsed beams on the recording layer at an interval that is shorter than the diameter of the pulsed beams on the recording layer. The step of generating the write signal includes generating the write signal such that the each sum of variations in the optical constant at each irradiated spot of the pulsed beam on the recording layer through the end of a write operation forms a predetermined variation pattern.

A program according to the present invention is set up to make an apparatus for writing data on an information storage medium perform recording processing. The recording processing includes the steps of: generating a modulation signal to write information on the information storage medium; and irradiating the information storage medium with a pulsed beam based on the write signal generated by a write compensation section. The information storage medium includes a recording layer, which has an optical constant that changes continuously with the total quantity of light received. The step of irradiating includes radiating and condensing multiple pulsed beams on the recording layer at an interval that is shorter than the diameter of the pulsed beams on the recording layer. The step of generating the write signal includes generating the write signal such that the each sum of variations in the optical constant at each irradiated spot of the pulsed beam on the recording layer through the end of the recording processing forms a predetermined variation pattern.

Still another apparatus according to the present invention is designed to read information from an information storage medium. The information storage medium includes a recording layer, which has an optical constant that changes continuously with the total quantity of light received. The information has been stored on the recording layer as a combination of a plurality of sub-channel signals. The apparatus includes: a reading section, which irradiates the recording layer with a beam to generate a read signal based on the light that has been reflected from the information storage medium; and a demodulating section, which multiplies the read signal and each of carrier signals together to generate each of sub-channel signals, associated with the respective carrier signal, and detect the information based on each sub-channel signal.

In one preferred embodiment, the information has been stored on the recording layer on the basis of a symbol with a predetermined length. There is a non-recorded area that stores no information between the symbols of the recording layer. And the demodulating section detects the top of the symbol by reference to a signal indicating the non-recorded area in the read signal.

In this particular preferred embodiment, the demodulating section generates a clock signal based on the signal indicating the non-recorded area.

In an alternative preferred embodiment, the non-recorded area is interposed between areas with a predetermined optical constant pattern.

An information storage medium according to the present invention includes a base material and a recording layer for storing information. The information is stored in the recording layer on the basis of a symbol with a predetermined length. And there is a non-recorded area that stores no information between the symbols of the recording layer.

In one preferred embodiment, the recording layer has an optical constant that changes continuously with the total quantity of light received, and the non-recorded area is interposed between areas with a predetermined optical constant pattern.

## EFFECTS OF THE INVENTION

Paying attention to one particular location on an information storage medium, the information storage medium of the present invention includes a recording layer, which has an optical constant that changes continuously with the integrated quantity of light received at that location. When the recording layer is irradiated with multiple pulsed beams at an interval that is shorter than the diameter of the pulsed beams, a write compensation section generates a write signal such that the sum of variations in the optical constant at each irradiated spot of the pulsed beam on the recording layer through the end of a write operation has a predetermined variation pattern. By using such an information storage medium that has a continuously changing optical constant, information can be written using a multiplexed signal (e.g., an orthogonal frequency division multiplexed signal) and the recording density of the information storage medium can be increased. Also, by generating the write signal such that the sum of variations in the optical constant has a predetermined variation pattern, information can be written on such an information storage medium that has a continuously changing optical constant.

According to the present invention, a non-run-length-limited code can be used. That is why the error rate never deteriorates due to propagation of errors of a recording code and the errors can also be corrected. As a result, the recording density can be further increased.

In a preferred embodiment of the present invention, a difference in frequency between carrier signals of respective sub-channel signals is an integral multiple of the product of the inverse number of one symbol length and the linear velocity of the optical disk medium. Thus, the respective sub-channel signals have an orthogonal relation with respect to each other. By superposing those sub-channel signals with each other, a write signal is generated. And following the pattern of such a write signal, the optical constant of the recording layer changes and a write operation is carried out on a symbol-by-symbol basis. That is to say, this write operation is performed without threshold values, i.e., as analog recording.

In another preferred embodiment of the present invention, information is written on an information storage medium by superposing a number of mutually orthogonal sub-channel signals on a symbol-by-symbol basis. Also, a read signal is generated based on the light that has been reflected from such an information storage medium, and is multiplied by each of carrier signals, thereby generating each of sub-channel signal. Then, the stored information is detected using those sub-channel signals. By reading and writing information by a multiplexing method such as orthogonal frequency division multiplexing in this manner, the recording density of the information storage medium can be increased.

In still another preferred embodiment of the present invention, when irradiated with a beam, the molecules of the material of the recording layer change their directions perpendicularly (or parallel) to the plane of polarization of the beam, thereby writing information there. When the molecules of the material of the recording layer change their directions, an optical rotatory phenomenon arises, thus changing the refractive index. And when the refractive index changes, the reflectance also changes. Also, the directions of the molecules of the material of the recording layer are proportional to the square of the beam intensity. Furthermore, as there are two optical rotatory directions, two different pieces of information can be written per sub-channel.

In yet another preferred embodiment of the present invention, the optical constant (such as refractive index) changes due to the two-photon absorption reaction of the material of the recording layer. Therefore, the optical constant is proportional to the square of the intensity of the pulsed beam. That is why even if the recording power has varied for some reason, the influence on the optical constant is proportional to the root of the power variation. That is to say, the influence of the power variation on the optical constant can be reduced. As a result, the recording power margin can be increased and more stabilized recording is realized.

## BRIEF DESCRIPTION OF DRAWINGS

FIG. **1** shows a conventional method of writing to an optical disk medium.
FIG. **2** shows a conventional method of writing to an optical disk medium.
FIG. **3** shows a conventional method of reading from an optical disk medium.
FIG. **4A** shows a conventional method of writing to an optical disk medium.
FIG. **4B** shows a conventional method of writing to an optical disk medium.
FIG. **5A** shows a conventional method of writing to an optical disk medium.
FIG. **5B** shows a conventional method of writing to an optical disk medium.
FIG. **6** shows a format for an information storage medium according to a preferred embodiment of the present invention.
FIG. **7** shows a recorder/player according to a preferred embodiment of the present invention.
FIG. **8** shows a writing method according to a preferred embodiment of the present invention.
FIG. **9** shows how to radiate a write beam according to the writing method of the preferred embodiment of the present invention.
FIG. **10A** shows a beam intensity distribution according to the writing method of the preferred embodiment of the present invention.
FIG. **10B** shows a refractive index distribution according to the writing method of the preferred embodiment of the present invention.
FIG. **11A** shows another beam intensity distribution according to the writing method of the preferred embodiment of the present invention.
FIG. **11B** shows another refractive index distribution according to the writing method of the preferred embodiment of the present invention.
FIG. **12** shows how much the non-linearity of the writing method according to a preferred embodiment of the present invention needs to be compensated for.

FIG. **13** shows parameters for one symbol as for a read operation according to a preferred embodiment of the present invention.

FIG. **14** shows the operation of scanning a single symbol with a read beam to generate a read signal according to a preferred embodiment of the present invention.

FIG. **15** shows a matrix equation defining the relation between the read beam, reflectance distribution and read signal for a single symbol according to a preferred embodiment of the present invention.

FIG. **16A** shows parameters for recording a symbol according to a preferred embodiment of the present invention.

FIG. **16B** shows write beams for recording a symbol according to a preferred embodiment of the present invention.

FIG. **17** shows a matrix equation representing the beam power distribution of one pulse of the write beam within a single symbol according to a preferred embodiment of the present invention.

FIG. **18A** shows a matrix equation for calculating a refractive index distribution after a k$^{th}$ write beam has been radiated according to a preferred embodiment of the present invention.

FIG. **18B** shows a matrix equation for calculating a refractive index distribution after the k$^{th}$ write beam has been radiated according to a preferred embodiment of the present invention.

FIG. **19** shows a matrix equation representing the beam intensity after a write beam for one symbol has been radiated according to a preferred embodiment of the present invention.

FIG. **20A** shows a turbo code modulator according to a preferred embodiment of the present invention.

FIG. **20B** shows components of the turbo code modulator according to the preferred embodiment of the present invention.

FIG. **20C** shows the state transition diagram of a 5/6 recursive systematic convolutional modulator according to a preferred embodiment of the present invention.

FIG. **21A** shows an orthogonal frequency division modulator according to a preferred embodiment of the present invention.

FIG. **21B** shows 64 QAM modulation mapping according to a preferred embodiment of the present invention.

FIG. **21C** shows the 64 QAM modulation mapping according to the preferred embodiment of the present invention.

FIG. **22** shows a refractive index pattern calculator according to a preferred embodiment of the present invention.

FIG. **23A** shows a write pulse intensity calculator according to a preferred embodiment of the present invention.

FIG. **23B** shows an fk calculator for the write pulse intensity calculator according to the preferred embodiment of the present invention.

FIG. **24** shows a reading method according to a preferred embodiment of the present invention.

FIG. **25** shows a read circuit according to a preferred embodiment of the present invention.

FIG. **26** shows an orthogonal frequency division demodulator according to a preferred embodiment of the present invention.

FIG. **27A** shows a turbo code demodulator according to a preferred embodiment of the present invention.

FIG. **27B** shows a MAP decoder for the turbo code demodulator according to the preferred embodiment of the present invention.

FIG. **28A** shows an example of read signal arrangements according to a preferred embodiment of the present invention.

FIG. **28B** shows another example of read signal arrangements according to a preferred embodiment of the present invention.

FIG. **29** shows a read synchronizing method according to a preferred embodiment of the present invention.

FIG. **30** shows the storage densities achieved by a writing method according to a preferred embodiment of the present invention and PWM recording, which is a conventional writing method, in comparison.

## DESCRIPTION OF REFERENCE NUMERALS

| **11** | optical disk medium |
|---|---|
| **12** | track |
| **13** | track boundary |
| **14** | write beam spot |
| **15** | area A |
| **16** | enlarged view of area A |
| **31** | read beam spot |
| **41** | optical disk medium |
| **42** | track groove |

| | |
|---|---|
| **43** | track center |
| **44** | optical disk medium |
| **45** | track groove |
| **60** | information storage medium |
| **61** | optical disk medium |
| **62** | symbol |
| **63** | symbol boundary |
| **64** | write beam spot |
| **65** | area B |
| **66** | objective lens |
| **67** | recording layer |
| **71** | write beam spot |
| **81** | write beam impulse |
| **82** | write signal |
| **83** | track center |
| **84** | emission interval |
| **91** | turbo code modulator |
| **92** | turbo code modulated signal |
| **93** | orthogonal frequency division modulator |
| **94** | orthogonal frequency division modulated signal |
| **95** | write compensation section |
| **96** | refractive index pattern calculator |
| **97** | refractive index signal |
| **98** | write pulse intensity calculator |
| **99** | write signal |
| **110** | pulse laser driver |
| **111** | pulse laser drive signal |
| **112** | pulse laser diode |
| **113** | collimator lens |
| **114** | beam splitter |
| **115** | quarter wave plate |
| **116** | objective lens |
| **117** | objective lens actuator |
| **118** | optical disk |
| **119** | recording layer |
| **120** | spindle motor |
| **121** | condenser lens |
| **122** | group of photosensors |
| **123** | focus error signal |
| **124** | tracking error signal |
| **125** | analog read signal |
| **126** | servo circuit |
| **127** | actuator drive signal |
| **128** | read circuit |
| **129** | digital read signal |
| **130** | top-of-symbol detection signal |
| **131** | orthogonal frequency division demodulator |
| **132** | orthogonal frequency division demodulated signal |
| **133** | turbo code demodulator |
| **141** | write signal |
| **142** | read signal |
| **143** | last write beam impulse of former symbol |
| **144** | last write beam impulse of latter symbol |
| **145** | valley of connecting portion of read signal |
| **146** | former symbol |
| **147** | latter symbol |
| **148** | connecting portion |
| **221** | 8/5 bit converter |

| 222 | 5/6 recursive systematic convolutional code modulator |
|---|---|
| 223 | random interleaver |
| 224 | 5/6 recursive systematic convolutional code modulator |
| 225 | selector |
| 230 | sub-channel data distributor |
| 231 | adder |
| 232 | frequency f1 sub-channel encoder |
| 233 | frequency f2 sub-channel encoder |
| 234 | frequency f3 sub-channel encoder |
| 235 | frequency f4 sub-channel encoder |
| 236 | frequency f5 sub-channel encoder |
| 237 | frequency f6 sub-channel encoder |
| 238 | frequency f7 sub-channel encoder |
| 239 | frequency f8 sub-channel encoder |
| 240 | frequency f9 sub-channel encoder |
| 241 | selector |
| 242 | symbol modulated data memory |
| 243 | selector |
| 244 | floating point sum of products calculator |
| 245 | Gaussian beam inverse matrix table |
| 246 | arithmetic controller |
| 247 | storage address/calculated address generator |
| 251 | selector |
| 252 | refractive index data memory |
| 253 | selector |
| 254 | selector |
| 255 | write signal data memory |
| 256 | selector |
| 257 | selector |
| 258 | fk calculator |
| 259 | register |
| 25A | $\Delta A[k]$ adder |
| 25B | fk memory |
| 25C | $\alpha k$ memory |
| 25D | LU decomposer |
| 25E | adder |
| 25F | write compensation fixed signal |
| 25G | sequence controller |
| 25H | convergence decision circuit |
| 25I | orthogonal frequency division modulated signal |
| 25J | subtractor |
| 261 | analog EQ circuit |
| 262 | A/D converter |
| 263 | top-of-symbol detector |
| 264 | sample clock generator |
| 271 | frequency f1 sub-channel decoder |
| 272 | frequency f2 sub-channel decoder |
| 273 | frequency f3 sub-channel decoder |
| 274 | frequency f4 sub-channel decoder |
| 275 | frequency f5 sub-channel decoder |
| 276 | frequency f6 sub-channel decoder |
| 277 | frequency f7 sub-channel decoder |
| 278 | frequency f8 sub-channel decoder |
| 279 | frequency f9 sub-channel decoder |
| 27A | decoded value selector |
| 281 | decoder #2 |
| 282 | variance calculator |
| 283 | channel value calculator |

| | |
|---|---|
| **284** | adder |
| **285** | random deinterleaver |
| **286** | random deinterleaver |
| **287** | decoder #1 |
| **288** | channel value calculator |
| **289** | adder |
| **28A** | random interleaver |
| **28B** | selector |
| **28C** | hard decision circuit |
| **291** | multiplier |
| **292** | 1.0 data table |
| **293** | Gaussian beam intensity distribution table |
| **294** | adder |
| **295** | subtractor |
| **296** | multiplier |
| **297** | multiplier |
| **298** | selector |
| **299** | register |
| **29A** | subtractor |
| **301** | Euclidean distance calculator |
| **302** | reference read signal generator |
| **303** | probability calculator |
| **304** | selector |
| **305** | $\gamma$ (m, m') memory |
| **306** | selector |
| **307** | register |
| **308** | adder |
| **309** | selector |
| **30A** | $\alpha$S(m) memory X |
| **30B** | selector |
| **30C** | $\alpha$S(m) memory |
| **30D** | selector |
| **30E** | register |
| **30F** | adder |
| **30G** | selector |
| **30H** | $\alpha$S(m) memory X |
| **30I** | selector |
| **30J** | $\alpha$S(m) memory |
| **30K** | selector |
| **30L** | multiplier |
| **30M** | adder |
| **30N** | register |
| **300** | multiplier |

## BEST MODE FOR CARRYING OUT THE INVENTION

Hereinafter, preferred embodiments of the present invention will be described with reference to the accompanying drawings.

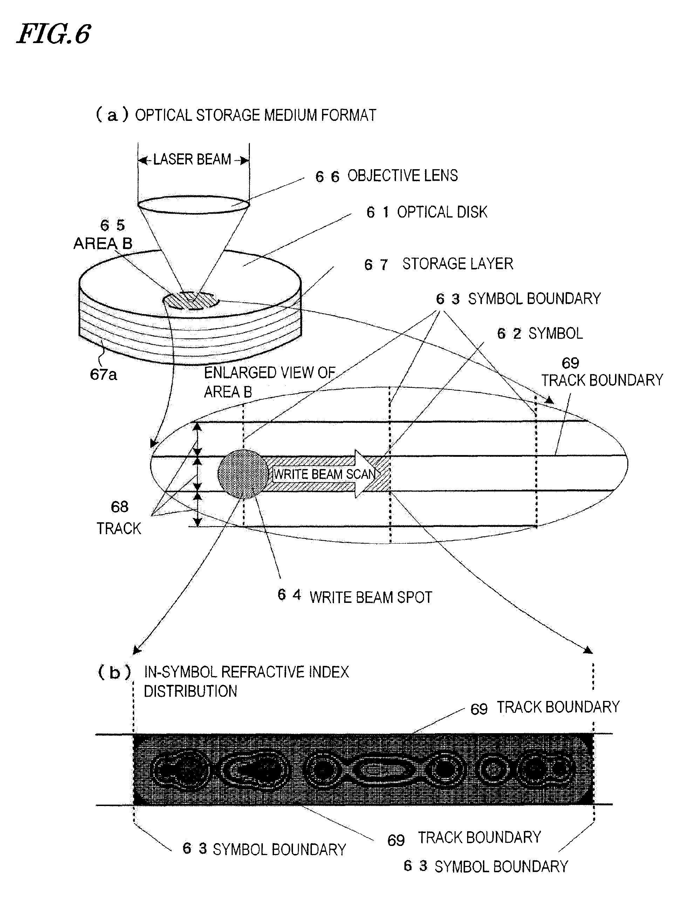

Portion **(a)** of FIG. **6** shows the format of an information storage medium according to a preferred embodiment of the present invention, which may be an optical disk medium, for example. The optical disk medium **61** shown in portion **(a)** of FIG. **6** includes a base material **67a** and at least one recording layer **67.** The recording layer **67** is arranged on the base material **67a.** In the example illustrated in FIG. **6,** the optical disk medium **61** includes a plurality of recording layers **67.**

The recording layer **67** is made of a photon mode recording material with almost no threshold value. Also, the recording layer **67** has an optical constant that changes continuously with the total quantity of light received. For example, the variation in the optical constant of the recording material may be substantially a function (e.g., a liner function or a quadratic function) of the intensity of a write beam. A write operation in which the variation in the optical constant of the recording material is a linear function of the intensity of the write beam is called "one-photon absorption recording". On the other hand, a write operation in which the variation in the optical constant of the recording material is a quadratic function of the intensity of the write beam is called "two-photon absorption recording".

The optical constant may be a refractive index, for example. The refractive index changes due to the two-photon or one-photon absorption of the material of the recording layer **67**. The probability of the two-photon absorption reaction is proportional to the square of the intensity of the pulsed beam. The probability of the one-photon absorption reaction is proportional to the intensity of the pulsed beam. A recording material with such a property may be diarylethene, for example, and the recording layer **67** includes such a material.

Also, in a preferred embodiment, the refractive index varies as the molecules of the recording layer change their directions perpendicularly to the plane of polarization of the pulsed beam. The probability of change of the directions of the molecules is proportional to either the square of the intensity of the pulsed beam or the intensity of the pulsed beam itself. A recording material with such a property may be a photoaddressable polymer (PAP), for example, and the recording layer **67** includes such a material.

Examples of materials for the recording layer **67** include fulgide, diarylethene, and PAP, which enable both one-photon absorption recording and two-photon absorption recording alike. These materials produce recording by changing their refractive index, which is one of optical constants. Also, it depends on the recording conditions (such as the wavelength of the beam) whether the recording material is proportional to the squared intensity of the pulsed beam or the intensity of the pulsed beam itself. In the following description, a recording material for two-photon recording such as diarylethene is supposed to be used. However, the principle, functions and effects of the present invention remain the same even if one-photon absorption recording is carried out.

The area B **65** on the optical disk medium **61** shows one of the recording layers **67** of the optical disk medium **61** and an enlarged view of the area B shows the details of the area B. As shown in the enlarged view of the area B, the recording layer **67** includes either concentric or spiral tracks **68,** each of which is further divided into symbols **62** with a predetermined length. In each of those symbols **62,** data is stored as a refractive index variation pattern as shown in portion **(b)** of FIG. **6.** A number of bits are multiplexed together in this pattern. And a read/write operation is carried out on a symbol-by-symbol basis. That is why unless the pattern of the entire symbol is scanned, data cannot be read.

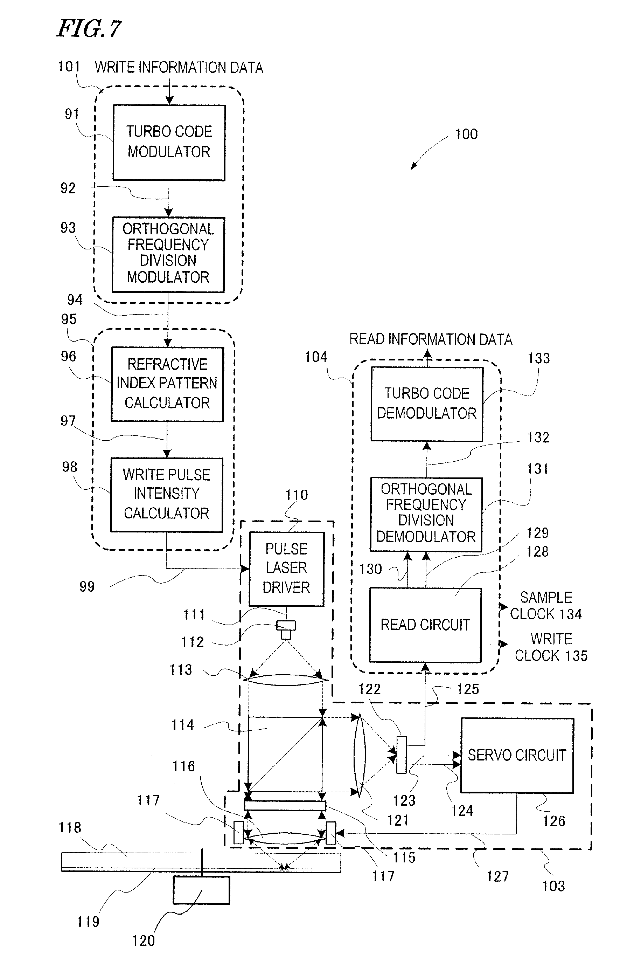

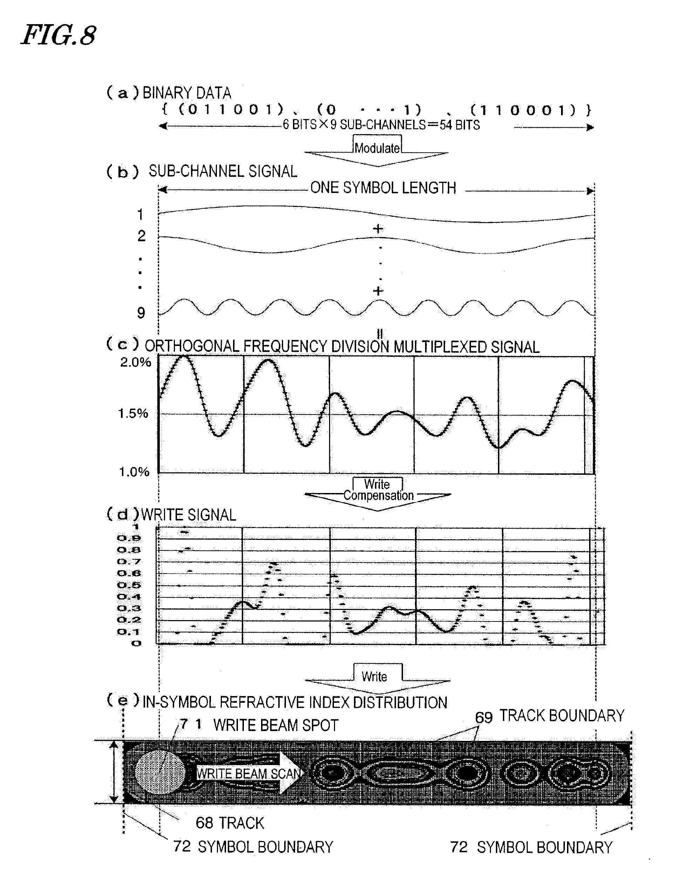

Hereinafter, an optical disk drive **100** for writing data on the optical disk medium **61** of this preferred embodiment and the writing method thereof will be described with reference to FIGS. **7** and **8.** FIG. **7** shows the optical disk drive **100.**

The optical disk drive **100** includes: a modulating section **101** for generating a multiplexed signal, representing information to be written on the optical disk medium **61,** by combining a number of sub-channel signals together; a write compensation section **95** for generating a write signal to write information on the optical disk medium **61;** and an optical head section **103** for irradiating the recording layer **67** of the optical disk medium **61** with a converged pulsed beam based on the write signal generated by the write compensation section **95.** In writing information on the disk medium **61,** the optical head section **103** functions as a recording section. While moving the beam spot of the pulsed beam, the optical head section **103** irradiates the recording layer **67** with a plurality of pulsed beams at intervals that are shorter than the diameter of the pulsed beams on the recording layer **67.** The write compensation section 95 generates the write signal such that the sum of variations in the optical constant at each irradiated spot of the pulsed beam on the recording layer **67** through the end of the write operation has a predetermined variation pattern. As used herein, the diameter of the pulsed beams on the recording layer **67** represents the extent of a pulsed beam spot area with a predetermined energy density. For example, the diameter of a pulsed beam may refer to the extent of an area that has generated power $1/e^2$ times as high as that at the center of the pulsed beam (where e is a natural logarithm).

Taking a particular location on the recording layer **67,** the particular location is irradiated with at least a portion of each of multiple pulsed beams. The write compensating section **95** generates the write signal such that the sum of the variations in the optical constant at the particular location, irradiated with each of the multiple pulsed beams, has a desired value.

The optical disk drive 100 may be either a recorder or a recorder/player. Alternatively, the optical disk drive 100 may also be a player that does not perform a write operation but does perform a read operation (to be described later). Some of those components of the optical disk drive 100 may be fabricated as a semiconductor integrated circuit. For example, the write compensation section **95** may be fabricated as a semiconductor integrated circuit. Those components of the optical disk drive **100** will be described in detail later.

Hereinafter, a writing method according to a preferred embodiment of the present invention will be described with reference to FIG. **8.**

The binary data shown in portion **(a)** of FIG. **8** is data to be written. Portion **(e)** of FIG. **8** shows a refractive index distribution produced in a symbol on the optical disk medium. As can be seen, the binary data to be written has been recorded as a refractive index pattern. Now it will be described with reference to portions **(a)** through **(e)** of FIG. **8** in this order exactly how the binary data is written there.

The data to be written is stored on the basis of a symbol with a predetermined length. For example, the binary data shown in portion **(a)** of FIG. **8** has been divided into multiple units, each having a predetermined number of bits. And the write operation is carried out on the basis of the binary data including a predetermined number of bits. That is to say, this number of bits is the number of bits to be stored in a single symbol. In portion **(a)** of FIG. **8,** the binary data included in the pair of braces is the data to be written in a single symbol, which has a size of 54 bits in this example.

The binary data for a single symbol is distributed to a plurality of sub-channels and modulated on a sub-channel basis. The data included in each pair of parentheses in portion **(a)** of FIG. **8** is data for one sub-channel. Portion **(b)** of FIG. **8** shows each sub-channel signal modulated. As shown in portion **(b)** of FIG. **8,** each sub-channel signal is generated over a single symbol length. The number of phase divisions is defined for each sub-channel signal. A difference in frequency between the carrier signals of the sub-channel signals is an integral multiple of the product of the spatial frequency of the symbol and a relative velocity of the beam spot with respect to the optical disk medium. In the example shown in portion **(b)** of FIG. **8,** the sub-channel signal with the lowest carrier frequency (i.e., the top signal in portion **(b)** of FIG. **8)** has a carrier frequency that is equal to the spatial frequency of the symbol. Thus, a signal for one wavelength has been generated within the symbol. The sub-channel signal with the second lowest carrier frequency (i.e., the middle signal in portion **(b)** of FIG. **8)** has a carrier frequency that is twice as high as the spatial frequency of the symbol. That is to say, a signal for two wavelengths has been generated within the symbol. Likewise, the carrier frequency of each sub-channel signal that follows increases by the spatial frequency of the symbol. Therefore, the carrier frequency of the ninth sub-channel signal is nine times as high as that of the first sub-channel signal. That is to say, the difference in spatial frequency between the carrier signals of each pair of sub-channel signals is a multiple of the spatial frequency of the symbol.

Each sub-channel signal is subjected to phase modulation. In the example shown in portion **(b)** of FIG. **8,** each sub-channel is modulated by 64 QAM (quadrature amplitude modulation), which is an amplitude-phase modulation where each sub-channel may have 64 different amplitudes and phases. That is to say, since six bits can be distributed to each sub-channel, 54 bits (=6 bits×9 sub-channels) can be written per symbol. Alternatively, each sub-channel may also be modulated by PSK (phase shift keying). In that case, resistance to amplitude variations increases and eventually, reliability also increases.

By combining these QAM modulated sub-channel signals, the orthogonal frequency division multiplexed signal shown in portion **(c)** of FIG. **8** can be obtained. This orthogonal frequency division multiplexed signal is the signal to be written. However, even if a write operation is performed using a write beam of which the intensity is proportional to this signal, the same signal cannot be obtained during a read operation for any of the following three reasons: (1) the write operation itself is two-photon absorption recording, of which the probability is proportional to the square of the intensity of the write beam; (2) the read signal is obtained as a convolution of the intensity pattern of the read beam spot and the refractive index pattern, and therefore, has been filtered; and (3) if the emission interval of the write beam is narrower than the diameter of the write beam spot, some portion may be irradiated with multiple beam spots, which is unique to this write method.

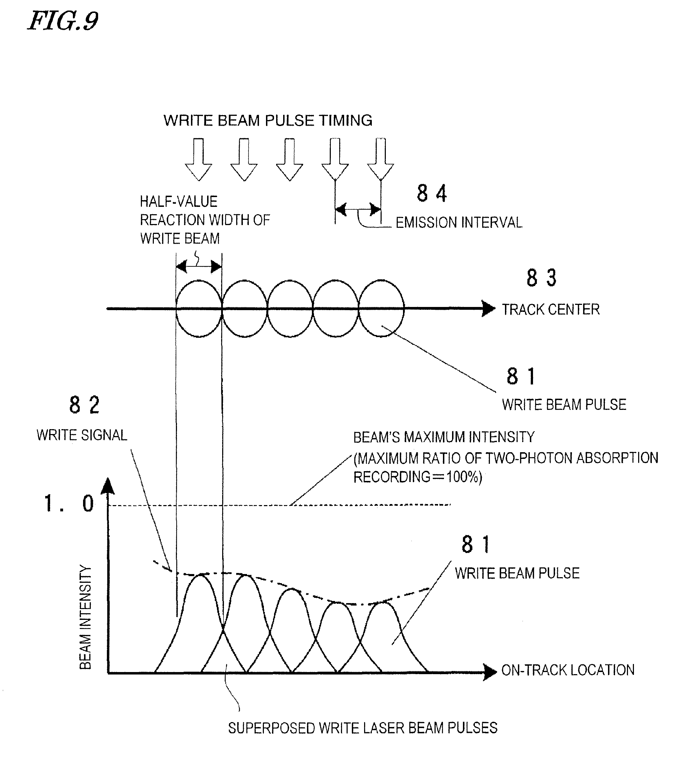

FIG. **9** shows how to perform two-photon absorption recording. According to two-photon absorption recording, the write beam is usually a very short pulse. This is because as the two-photon absorption recording requires high-power write beams, the peak power needs to be increased with the duty decreased. In the example shown in FIG. **9,** the write operation is supposed to be performed by irradiating the track center **83** with write beam impulses **81** at regular emission intervals **84.** Therefore, a portion between two write beam impulses **81** is irradiated with beams twice. As for the intensities of the beams to be radiated, the intensity at which the probability of the two-photon absorption recording reaction is 100% is the maximum intensity, which is supposed to be 1.0 (and which will be referred to herein as "normalized write beam intensity"). That is to say, at the portion irradiated with that beam, diarylethene molecules will produce two-photon absorption reaction at a probability of 100% but no further reactions are supposed to occur. In the following description, the beam intensity will be represented by the probability of two-photon absorption reaction, i.e., the percentage of recording reaction that starts at 0%. Also, the refractive index when the two-photon absorption recording reaction has occurred 0% is supposed to be 1.55, the refractive index when the two-photon absorption recording reaction has occurred 100% is supposed to be 1.65, and the percentage of the two-photon absorption recording reaction is supposed to be proportional to the refractive index. The write operation is carried out under these conditions. If the write operation is performed using write beam impulses **81,** of which the intensities are proportional to the sampled value of the orthogonal frequency division multiplexed signal **82,** the same signal as the orthogonal frequency division multiplexed signal **82** cannot be reproduced even by reading the refractive index pattern produced.

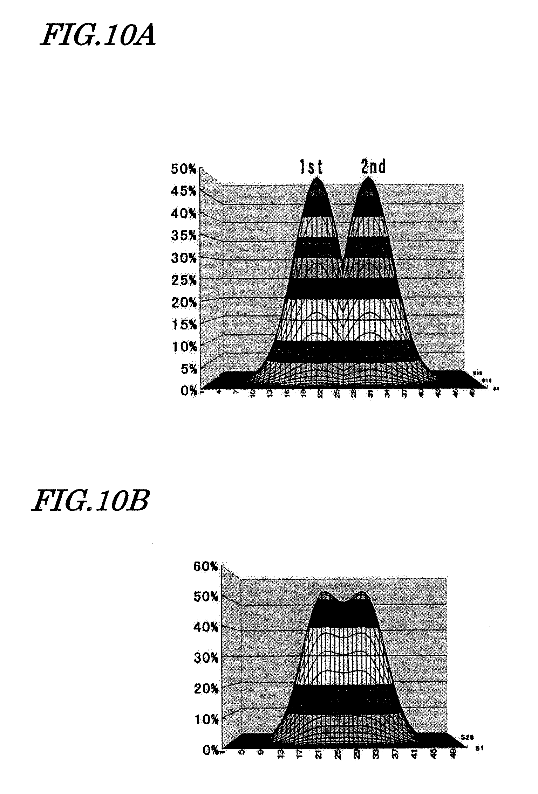

FIGS. **10A** and **10B** show the simplest example in which refractive index patterns are formed by two-photon absorption recording where two write beam impulses are radiated at an interval that is approximately equal to a half of the airy radius of the write beam. FIG. **10A** shows the intensity distribution of the two write beam impulses. Where the write beams overlap with each other, the write beam with the higher beam intensity is shown. These beams are generated when the objective lens has an NA of 0.85 and the laser light source has a wavelength of 650 nm. The ordinate is the beam intensity represented by the percentage of recording reaction. The peak intensity of the write beam impulses is an intensity that causes the recording reaction 50%. In FIG. **10A,** the write beam on the left-hand side is radiated first, and then the write beam on the right-hand side is radiated. At an intermediate location between the two beam spots, the intensity of the write beam is an intensity that causes the two-photon absorption recording reaction 28.7%.

FIG. **10B** shows the distribution of percentages of the two-photon absorption recording reaction that was carried out using the write beams shown in FIG. **10A.** For example, the percentage of the two-photon absorption recording reaction at an intermediate location between the beam spots of the two write beam impulses once decreases to 28.7% in response to the first write beam impulse on the left-hand side and then increases to 49.2% (=28.7%+(100%-28.7%) $\times$28.7%) in response to the second beam impulse on the right-hand side.

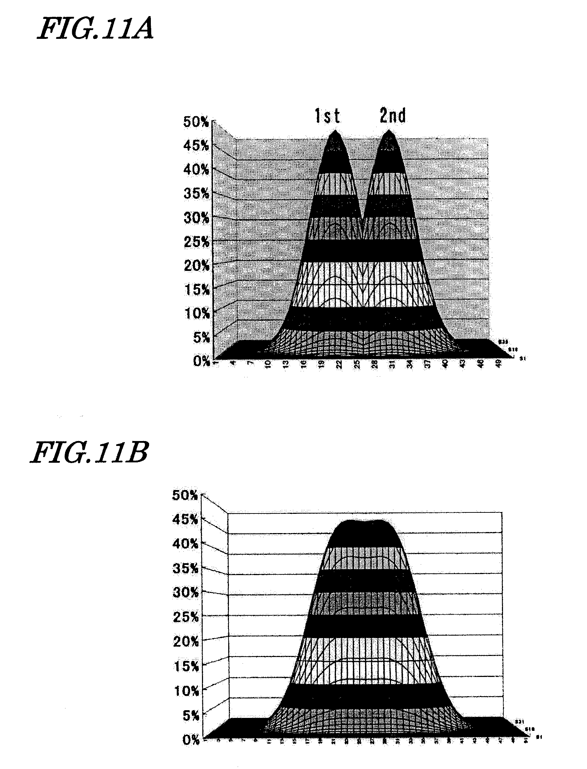

FIGS. **11A** and **11B** show refractive index patterns to be produced when the write beam intensities and the percentages of the two-photon absorption recording reaction have a linear relation. FIG. **11A** shows write beam impulses as in FIG. **10A.** On the other hand, FIG. **11B** shows a refractive index pattern that was produced with these write beam impulses when the write beam intensities and the percentages of the two-photon absorption recording reaction had a linear relation. When calculated as in FIG. **10B,** the percentage of two-photon absorption recording reaction at an intermediate location between the beam spots of the two write beam impulses will be 57.4%(=28.7%+28.7%).

Since the two beam impulses have the same intensity, the resultant refractive index distribution should be flat between the beam spots of these two beam impulses. Comparing FIGS. **10B** and **11B** with each other, it can be seen that the refractive index distribution between the beam spots of the two beam impulses is almost flat in FIG. **11B** but has a decline in FIG. **10B.** Also, in FIG. **11B,** the write beam intensities and the percentages of two-photon absorption recording reaction have a relation defined by simple additions. On the other hand, in FIG. **10B,** the total percentage of two-photon absorption reaction is obtained by multiplying the percentage of unreacted molecules in the area where the two-photon absorption recording reaction occurred last time (i.e., 100% minus the percentage of the previous reaction) by the percentage of reaction to be determined by the intensity of the next write beam.

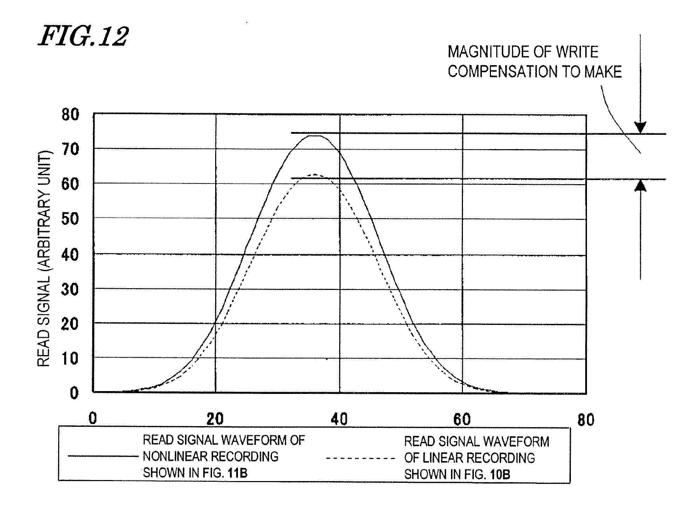

FIG. **12** shows read signals representing reflected light to be produced by scanning the refractive index patterns shown in FIGS. **10B** and **11B** with a read beam having a constant intensity. The difference between these two read signals results from the non-linearity of the reaction in the area where the write beam overlap with each other. If the write operation is carried out with such overlapping write beams, the write signal will be different from the refractive index pattern produced actually, and write compensation will be required to compensate for the difference. That is to say, the difference between the two signals shown in FIG. **12** corresponds to the magnitude of write compensation to be made.

As the method of write compensation, a write signal that will result in the desired read signal may be figured out asymptotically by hill climbing or any other simulation method. In this case, the desired read signal is similar to the orthogonal frequency division multiplexed signal to be written. The simulation algorithm may have the steps of:

(Step 1) set an initial write signal appropriately, generate write beam impulses by sampling the initial write signal at predetermined intervals, perform a write operation using the impulses, and obtain a refractive index pattern produced;

(Step 2) consider that the write operation is the two-photon absorption recording in which the probability is proportional to the square of the write beam intensity and that the data is written non-linearly by being irradiated with write beam spots a number of times, and obtain a read signal as a convolution of the intensity pattern of a read beam spot and the refractive index pattern;

(Step 3) compare the read signal obtained in step (2) to the desired read signal, and change the write signal such that the read signal obtained approaches to the desired read signal. More specifically, compare the read signal obtained in step (2) to the desired read signal and increase the intensity of the write beam impulse where the read signal obtained has a lower level or decrease the intensity of the write beam impulse where the read signal obtained has a higher level. And at the same time, calculate the integrated value of the absolute values of the differences between the read signal obtained and the desired read signal and use this value as an estimate of the write signal;

(Step 4) perform a write operation as in step (1) using the write signal changed; and

(Step 5) go back to step (2).

These processing steps are repeatedly carried out until the estimate of step (3) becomes equal to or smaller than a predetermined value. As a result, the orthogonal frequency division multiplexed signal shown in portion **(c)** of FIG. **8** is converted into the write signal shown in portion **(d)** of FIG. **8.** In the write signal curve shown in portion **(d)** of FIG. **8,** the dots represent the beam spots of the write beam impulses.

Portion **(e)** of FIG. **8** shows a refractive index pattern to be produced when a write operation is performed using the write signal shown in portion **(d)** of FIG. **8.** The write beam spot **71** moves along the track **68.** By scanning the track **68** with a beam, of which the intensity is proportional to that of the write signal shown in portion **(d)** of FIG. **8,** the refractive index pattern changes within the track **68** and the binary data shown in portion **(a)** of FIG. **8** is written.

A method of seeking a solution asymptotically such as the hill climbing method needs s lot of computations. That is why a method of finding a solution more analytically would require fewer computations and figure out the write signal more quickly. Hereinafter, a write compensation method according to a preferred embodiment of the present invention will be described.

The write compensation according to this preferred embodiment of the present invention is characterized by obtaining the intensity pattern of a write beam within a symbol such that a desired orthogonal frequency division modulated wave can be produced during a read operation. The intensity pattern of the write beam can be calculated in two steps.

Specifically, in the first step, an optical constant pattern that will result in the desired orthogonal frequency division modulated wave is obtained. Then, in the next step, the intensity pattern of the write beam to record this optical constant pattern is obtained.

First, an optical constant pattern that will result in the desired read signal is obtained. More specifically, an optical constant pattern for one symbol, in which an orthogonal frequency division modulated wave is produced as a read wave, is obtained. In this example, the optical constant is refractive index, a Gaussian beam is used as a read beam, and a read signal is supposed to be obtained by scanning the refractive index pattern with a continuously radiated read beam. The read signal is obtained by performing a convolution operation on the refractive index pattern using the read beam. Thus, its inverse convolution operation may be performed.

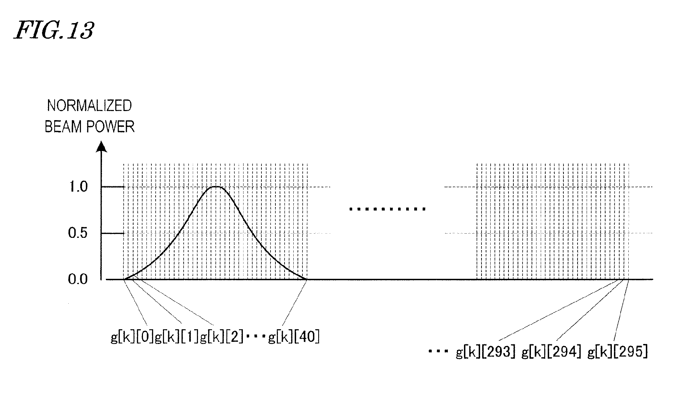

FIG. **13** shows parameters within one symbol that are related to a read operation. The calculations should be done two-dimensionally, considering that the read/write operation is performed two-dimensionally. In this example, however, track center values are calculated as representative values. g[k][L] represents the normalized beam power of a Gaussian read beam at a sample point **L** at the $k^{th}$ sampling timing. In this case, the peak power of the Gaussian read beam is normalized as 1.0. Rf[L] represents the reflectance at the sample point L on the recording layer where data is stored. The reflectance has a value corresponding to the refractive index. Plysg[L] represents the ratio of the reflected light to the radiated light when the $k^{th}$ beam [k][L] of the read light is radiated. That is to say, supposing the read beam has constant power, this ratio will be equivalent to the read signal. That is why this ratio will be referred to herein as a "read signal". Plysg[L] is the $L^{th}$ sample value of the read signal. In the example shown in FIG. 13, there are 256 sample points.

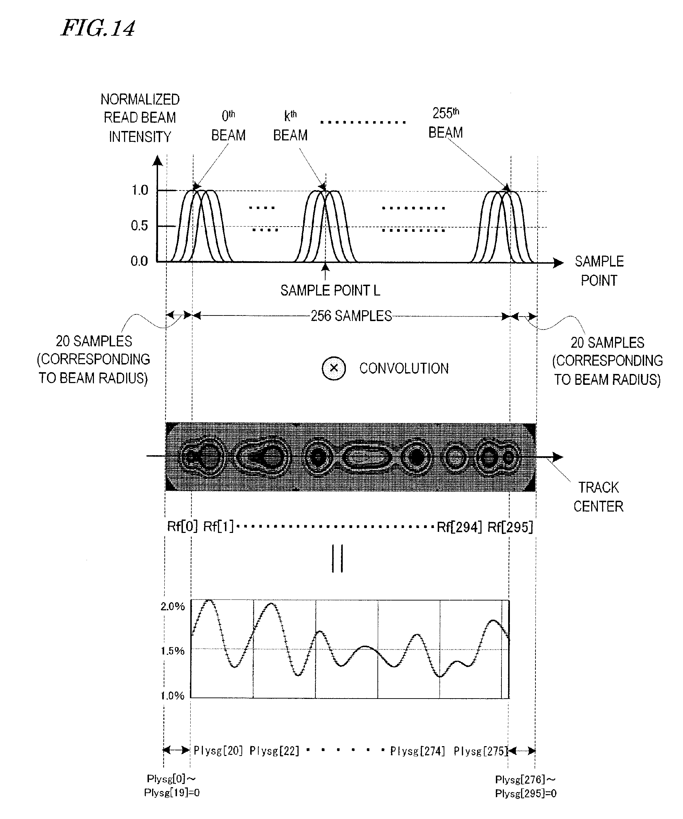

FIG. **14** shows a process by which a read signal is obtained by scanning a single symbol with a read beam. In this example, the read beam is supposed to be radiated continuously at a constant intensity and the read signal is supposed to be sampled 256 times within a single symbol length. The upper portion of FIG. **14** shows the distributions of the zeroth beam g[0][L] through the $255^{th}$ beam g[255][L] of the read light at those sample points. Portions for the beam radius of the read light before and after the symbol (i.e., the areas for 20 samples before and after the symbol) are also irradiated with the read light. Since the read light has constant intensity, the converged portion of g[k][L] also has a constant distribution.

The middle portion of FIG. **14** shows the reflectance pattern (refractive index pattern) recorded within a symbol. The reflectance is determined by the refractive index. For example, if the refractive index in a situation where the two-photon absorption reaction has occurred 0% on the recording layer is N1, the refractive index in a situation where the two-photon absorption reaction has occurred 100% there is N2, the portions that sandwich the recording layer vertically is N0, the wavelength of the read beam is λ, the thickness of the recording layer is D, the normalized refractive index is n[L] (which is normalized to be 0 at the refractive index **N1** and to be 1.0 at the refractive index **N2**) and N12=N1+(N2 - N1)×n[L], then the reflectance Rf[L] of the portion with the normalized refractive index n[L] is:

$$1-(8\times N0\hat{\ }2\times N12\hat{\ }2/((N12\hat{\ }2+N0\hat{\ }2)\hat{\ }2+4\times N0\hat{\ }2\times N12\hat{\ }2-(N0\hat{\ }$$

$$2-N12\hat{\ }2)\hat{\ }2\times\cos(4\times\pi\times N12\times D/\lambda)))$$

Since N1, N2, N0, λ and D are known and constant, the reflectance Rf[L] and the normalized refractive index n[L] have one-to-one correspondence. That is why the pattern shown in this middle portion will be referred to herein as a "reflectance pattern".

The lower portion of FIG. **14** shows a read signal obtained by irradiating the reflectance pattern shown in the middle portion of FIG. **14** with the read beam shown in the upper portion of FIG. **14.** This read signal is obtained by performing a convolution operation on the read beam distribution shown in the upper portion of FIG. **14** using the reflectance pattern shown in the middle portion of FIG. **14.**

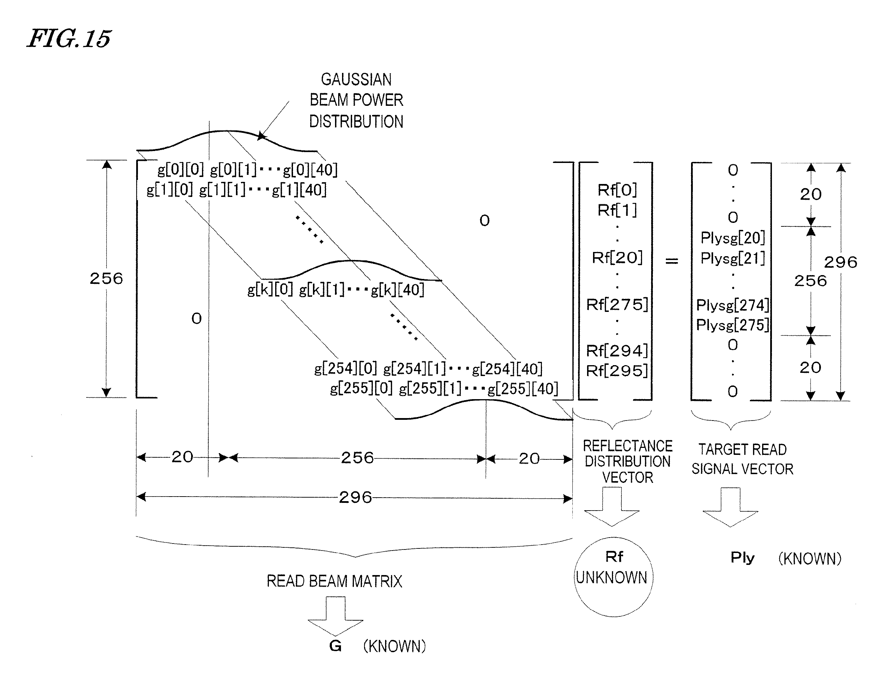

Taking these results into consideration, the relation between the read beam, the reflectance distribution and the read signal for a single symbol can be represented by the matrix equation shown in FIG. **15,** in which the matrix on the left-hand side will be referred to herein as a "read beam matrix", the matrix on the right-hand side will be referred to herein as a "read signal vector" and the middle matrix will be referred to herein as a "reflectance distribution vector". Since the read beam matrix and the read signal vector are known, the reflectance distribution vector can be obtained by multiplying both sides of the equation with the inverse matrix of the read beam matrix from left to right.

Next, the intensity pattern of the write beam that forms this optical constant pattern, i.e., the refractive index pattern, will be obtained.

Consider how the refractive index at a particular location varies with the write beam. The normalized intensity of the write beam that irradiates the particular location for the $k^{th}$ time is supposed to be b[k] and the normalized refractive index after the write beam has been radiated for the $k^{th}$ time is supposed to be n[k]. As used herein, the "normalized write beam intensity" is supposed to be a beam intensity that causes the two-photon absorption recording reaction 100% when b[k]=1.0 as in FIG. **9** and is supposed to have a linear value. Likewise, the "normalized refractive index" is supposed to be a refractive index that causes the two-photon absorption recording reaction 100% when n[k]=1.0 and is supposed to have a linear value. Then, based on the refractive index after the write beam has been radiated for the (k-1)$^{th}$ time, the refractive index after the write beam has been radiated for the $k^{th}$ time can be calculated as:

$$n[k]=n[k-1]+(1-n[k-1])\times b[k]\hat{\ }2$$

This equation can be modified into:

$$(1-n[k])=(1-n[k-1])\times(1-b[k]\hat{\ }2)$$

This is a kind of a geometrical series. If N[k]=1-n[k], then

$$N[k]=N[k-1](1-b[k]\hat{\ }2)$$

Therefore, N[k] can be represented by b[0] through b[k]. That is to say,

$$N[k]=N[0](1-b[0]\hat{\ }2)\times(1-b[1]\hat{\ }2)\times\ \ldots\ \times(1-b[k-1]\hat{\ }2)\times$$

$$(1-b[k]\hat{\ }2)$$

N[0] shows 1-n[0]. Consequently, if the initial refractive index and the write beam intensity at a particular point are known, the refractive index after the write beam has been radiated for an arbitrary number of times can be calculated.

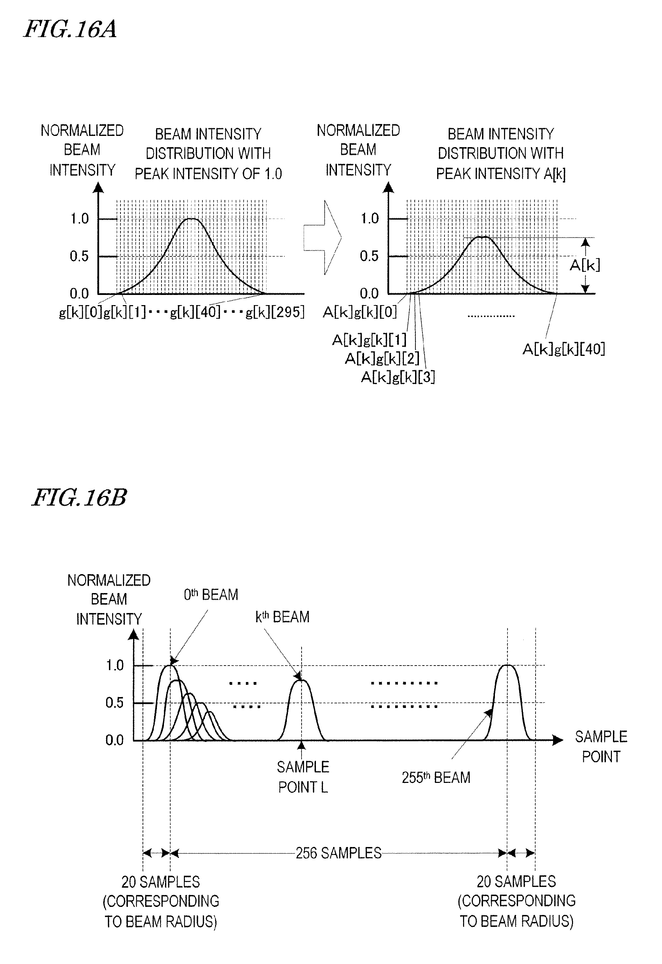

In the same way, if the intensity of the write beam is known, the refractive index pattern recorded within a symbol can also be calculated analytically. FIGS. **16A** and **16B** show parameters when a single symbol is recorded. In this example, the write beam is supposed to be radiated as pulses toward the same locations as the read sample points, and 256 pulses are supposed to be radiated per symbol. The 20 samples (corresponding to the radius of a write beam) before the 256 sample interval irradiated with the write beam and another 20 samples after the 256 sample interval are written with the perimeter portion of the write beam.

The parameters are re-defined by adding location parameters to the parameters of the beam distribution described above. Suppose the normalized intensity of the write beam radiated toward a sample point L for the $k^{th}$ time is b[k][L], the normalized refractive index after the sample point L has been irradiated with the write beam for the $k^{th}$ time is n[k][L], and N[k][L]=1-n[k][L]. Also, the normalized beam power distribution of the write beam at the sample point L is g[k][L] (of which the peak beam power is supposed to be 1.0). A[k] shows the peak power of the $k^{th}$ beam. The beam power distribution of the $k^{th}$ write beam is represented by A[k]$\times$g[k][L]. FIG. **16A** shows the distribution of A[k]$\times$g[L]. Since the g[k][L] shows a Gaussian distribution and is already known, the write beam distribution can be represented only by A[k].

FIG. **16B** shows the locations of write light beams within a single symbol. The beam spots of the write beam are located at their associated sample points of the read beam. That is why the sample points L are defined from 0 through 295. Unlike the read beam, however, the intensity of the write beam is not constant but variable.

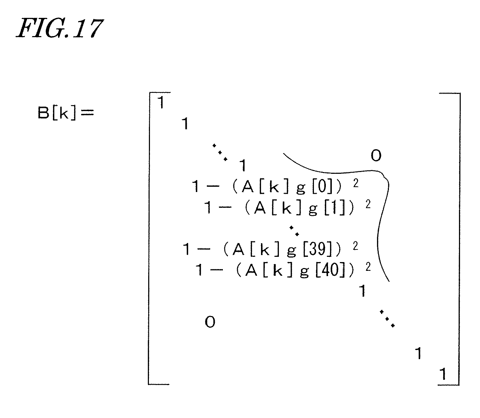

Also, the beam power distribution of one pulse of the write beam within a single symbol can be represented by the matrix equation shown in FIG. **17.** This matrix will be referred to herein as a "beam matrix" and defined as B[k]. In this example, the g[k][L] distribution is supposed to be a Gaussian distribution. Alternatively, this distribution may be optimized for read/write learning.

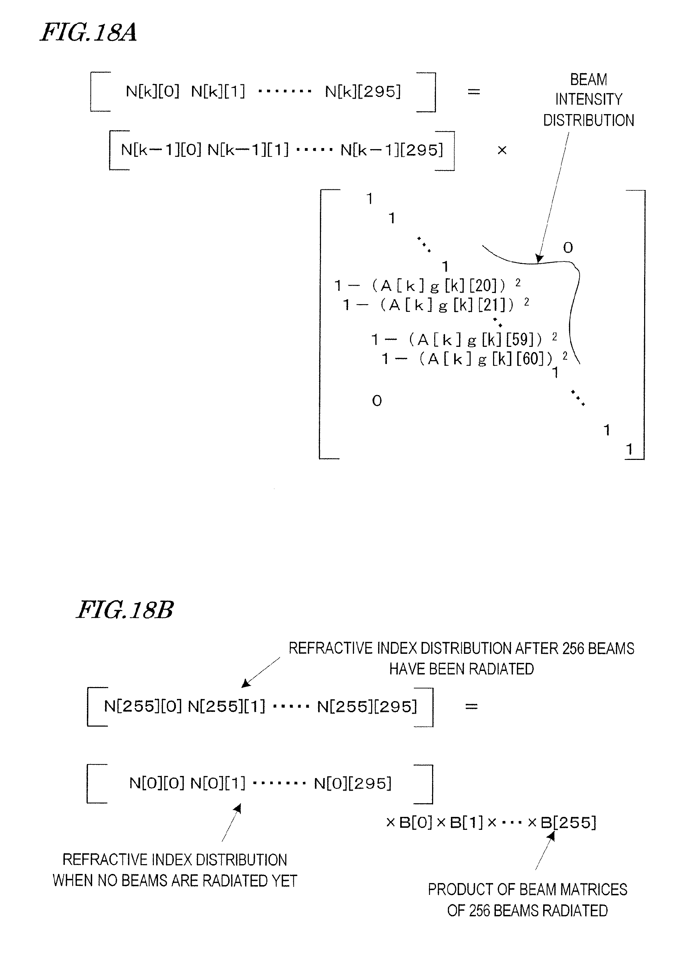

Using these re-defined parameters, the refractive index distribution after the $k^{th}$ write beam has been radiated is obtained based on the refractive index distribution after the (k-1)$^{th}$ write beam has been radiated and the beam power distribution of the kth write beam. In FIG. **18A,** the refractive index distribution after the kth write beam has been radiated is calculated by a matrix equation based on the refractive index distribution after the (k-1)th write beam has been radiated and the beam matrix of the kth write beam. N[k][0]=1-n[k][0] where n[k][0] is the normalized refractive index at the sample point 0 after the kth beam has been radiated. In this case, refractive index variation matrix represented by the kth beam power distribution b[k][ ] ≡ beam distribution matrix≡B[k].

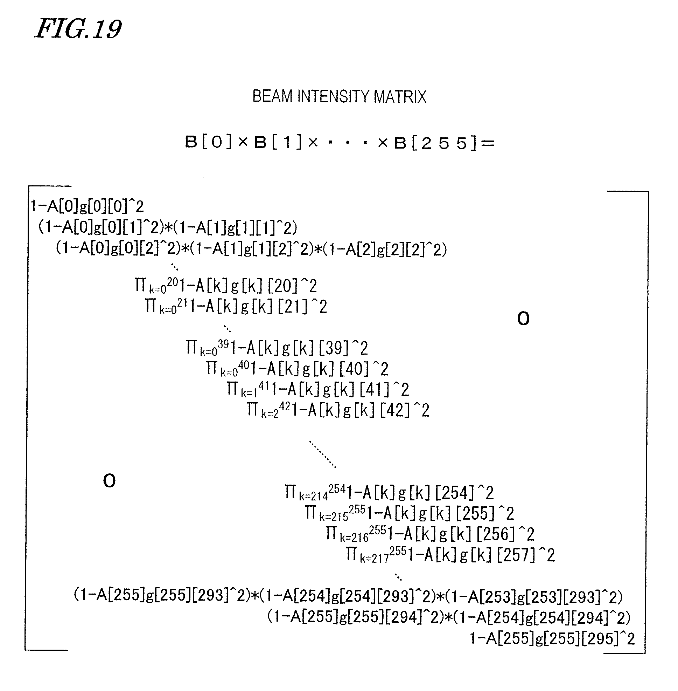

The refractive index distribution within a single symbol after the kth write beam has been radiated is represented by the matrix equation shown in FIG. **18B.** In this case, since every zeroth refractive index distribution is equal to zero, every N[0][L] is equal to one. The matrix equation is eventually transformed into the matrix equation shown in FIG. **19.** According to this matrix equation, if A[k] is known, then the desired write beam intensity pattern can be obtained. This matrix equation can be solved quickly by the Newton-Lapson method.

As described above, the target read signal vector, obtained by substituting the target read waveform into plysg shown in FIG. **15,** is multiplied by the inverse matrix of the ream beam matrix **G** to calculate a reflectance distribution vector. Thereafter, the reflectance is converted into a refractive index, which is then substituted into the refractive index distributions shown in FIGS. **18A** and **18B** after the write beams have been radiated 256 times, thereby obtaining beam matrices A[0] through A[255] by the Newton-Lapson method, for example. As a result, a write beam intensity can be obtained and reflected on the write-compensated write signal.

By formulating the write compensation computations into a mathematical equation and solving that equation as described above, the write beam intensity pattern can be calculated quickly so as to obtain the desired orthogonal frequency division modulated waveform. As a result, a write-compensated write signal can be obtained.

The optical disk drive **100** shown in FIG. **7** performs the write compensation described above. Hereinafter, it will be described in detail how the optical disk drive **100** operates.

The modulating section **101** includes a turbo code modulator **91** and an orthogonal frequency division modulator **93.** The write compensation section **95** includes a refractive index pattern calculator **96** and a write pulse intensity calculator **98.** The optical head section **103** includes a pulse laser driver **110,** a pulse laser diode **112,** a collimator lens **113,** a beam splitter **114,** a quarter wave plate **115,** an objective lens **116,** an objective lens actuator **117,** a condenser lens **121,** a group of photosensors **122** and a servo circuit **126.** The optical disk medium **118** including the recording layer **119** is rotated by the spindle motor **120.**

In reading information from the optical disk medium, the optical head section **103** serves as a read section, which irradiates the recording layer with a beam and generates a read signal based on the light that has been reflected from the optical disk medium. The optical disk drive **100** further includes a demodulating section **104,** which multiplies the read signal, generated by the optical head section **103,** by a plurality of carrier signals, thereby generating a plurality of sub-channel signals associated with the carrier signals. Also, the demodulating section **104** detects the information stored on the information storage medium based on those sub-channel signals. The read operation will be described later.

Hereinafter, the write compensation operation performed by the optical disk drive **100** will be described.

The data to be written (i.e., the write data) is input from an information source coding block (not shown) to the turbo code modulator **91** (see FIG. **7**), which modulates the data into a high-coding-efficiency turbo code as disclosed by H. Ogiwara and M. Yano, "Improvement of Turbo Trellis-Coded Modulation System", IEICE Trans. Fundamentals, E-81-A, pp. 2040-2046, 1998. The turbo code for use in wireless communications normally has a coding efficiency of about 0.3 to about 0.5, which is lower than that of optical disks (of about 0.8). The channel of optical disks has a low pass filter characteristic, which makes it difficult to increase the recordable frequency. That is why if the coding efficiency is low, the resultant recording density will also be low. For that reason, the high-coding-efficiency turbo code is used. As the internal code of the high-coding-efficiency turbo code, a code for converting 5-bit data into a 6-bit ungerboeck code is used. The ungerboeck code is disclosed by G. Ungerboeck, "Channel Coding with Multilevel/Phase Signals", IEEE Trans. Inform. Theory, Vol. IT-28, No. 1, pp. 55-67, Jan. 1982.

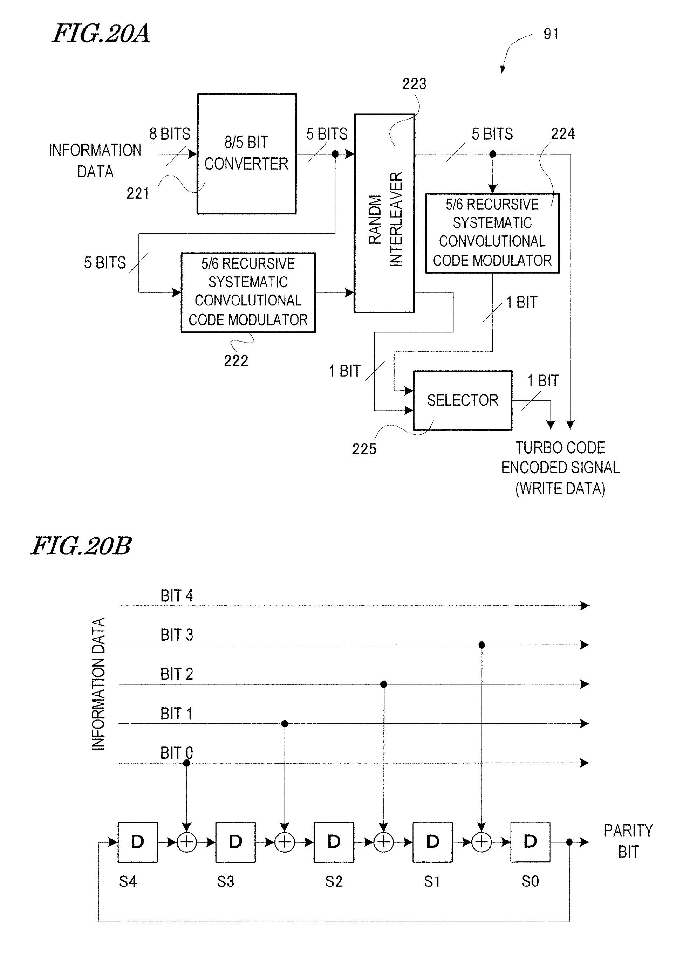

FIG. **20A** shows the turbo code modulator **91.** In this example, the write data is input as eight-bit parallel data. The eight-bit write data is input to an 8/5 bit converter **221,** which converts the eight-bit write data into five-bit parallel data. The converted five-bit data is then supplied to a 5/6 recursive systematic convolutional code modulator 222 and a random interleaver **223.**

The 5/6 recursive systematic convolutional code modulator 222 receives the five-bit write data and outputs a single parity bit of a six-bit recursive systematic convolutional code. FIG. **20B** shows an exemplary recursive systematic convolutional code modulator. In FIG. **20B,** D denotes a D-flip-flop, which operates in response to a clock signal, of which the frequency is nine times as short as one symbol period. That is to say, one OFDM symbol is made up of nine turbo codewords. In the turbo code modulator 91, the 8/5 bit converter and the circuits that follow it all operate responsive to this clock signal. Also, in FIG. **20B,** the "+" sign indicates adding one bit. The output parity bit is the input for the leftmost flip-flop, thereby realizing the recursive operation. The modulated data has five-bit data and a single parity bit, but only the single parity bit is output.

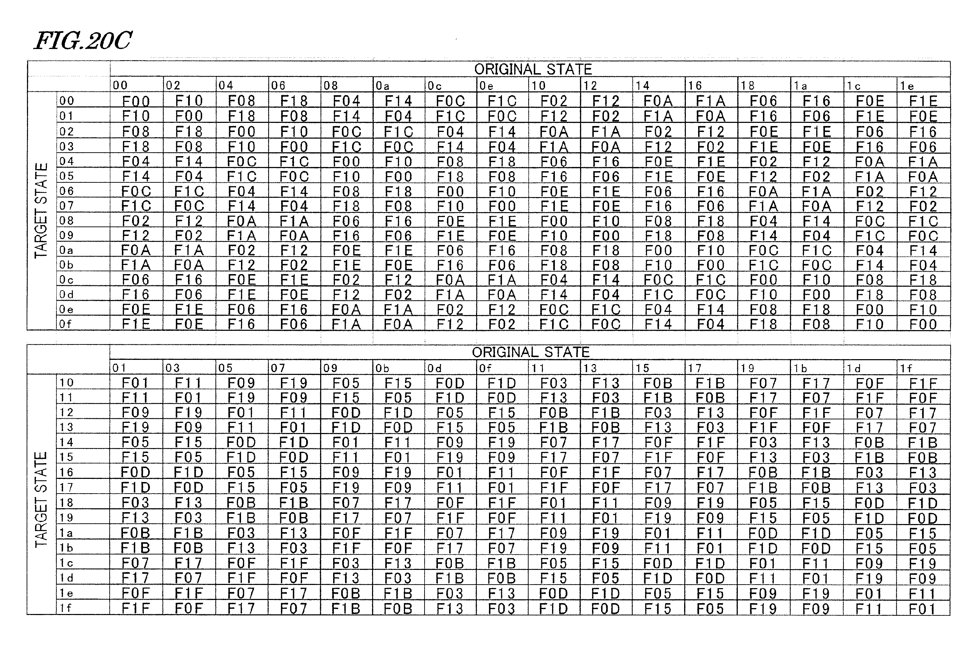

FIG. 20C shows the state transition table of the 5/6 recursive systematic convolutional code modulator **222.** In this table, the respective states represent the values **S4**, **S3, S2, S1** and **S0** of the flip-flops shown in FIG. **20B.** Also, in the alphanumeric codes beginning with F on this table, the numerical parts thereof are hexadecimal numbers corresponding to the output values shown in FIG. **20B** (i.e., bit 4, bit 3, bit 2, bit 1, bit 0 and parity bit) and the letter F indicates the mapping of the 64 QAM to be described later.

The random interleaver **223** rearranges the arrangement order of input data/its associated parity bit pairs at random on a pair-by-pair basis. The interleave length corresponds to m symbols and is ordinarily less than one track round length. In this example, one codeword is supposed to be made up of six bits and one interleave length is supposed to be made up of $255 \times 129$ words (=197,370 bits). This interleave unit will be referred to herein as "one turbo codeword".

The random interleaver **223** supplies the randomly rearranged data to another 5/6 recursive systematic convolutional code modulator **224**. In this case, the 5/6 recursive systematic convolutional code modulators **222** and **224** have the same circuit. That is why the 5/6 recursive systematic convolutional code modulator **224** also outputs a single parity bit. The parity bits supplied from the two 5/6 recursive systematic convolutional code modulators are input to the selector **225,** which selectively outputs the two parity bits alternately. That is to say, this turbo code is a puncture code.

The alternately output single parity bit and the five-bit data, supplied from the random interleaver **223,** are output as a turbo code modulated signal **92** including six-bit parallel data to the orthogonal frequency division modulator **93.**

Since this turbo code modulator **91** receives five-bit write data and outputs a six-bit turbo code, the coding rate is 5/6=0.83.

The orthogonal frequency division modulator **93** modulates the input turbo code modulated signal **92,** including the six-bit parallel data, after having distributed the data to the respective sub-channels, and outputs an orthogonal frequency modulated signal **94** in which the modulated data has been added to the respective sub-channels.

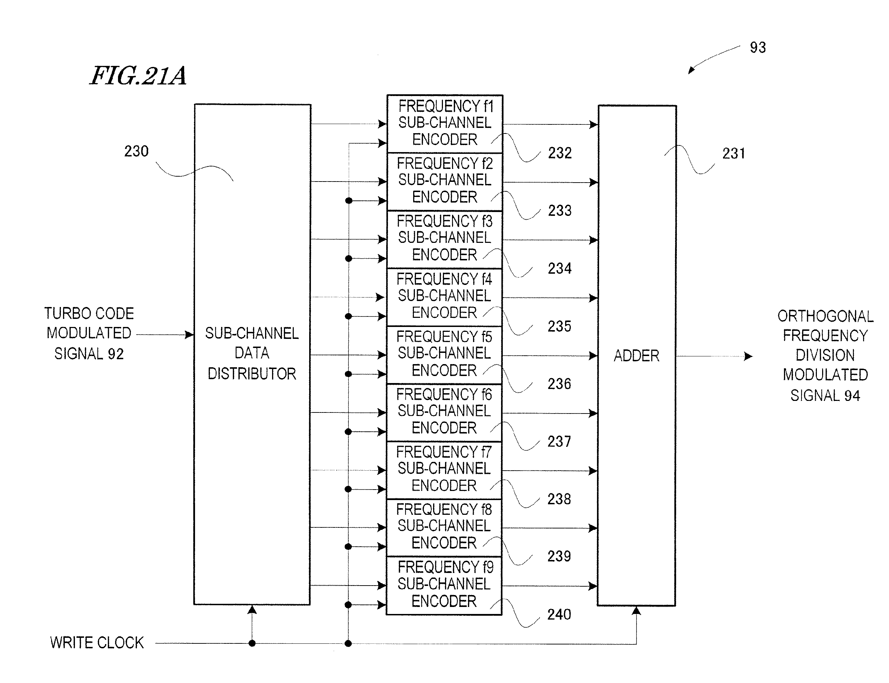

FIG. **21A** shows the orthogonal frequency division modulator **93.** The incoming turbo code modulated signal is supplied to a sub-channel data distributor **230,** which sequentially and repeatedly distributes the six-bit parallel data of the input turbo code modulated signal to frequency f1 to f9 sub-channel encoders **232** to **240.**

The frequency f1 through f9 sub-channel encoders **232** through **240** receive the six-bit parallel data and a write clock signal from the sub-channel data distributor **230,** and subject the six-bit parallel data to the 64 QAM modulation with carriers having respective frequencies (e.g., frequency **f1** for the frequency f1 sub-channel encoder **232**), thereby outputting 64 QAM modulated waveform signals synchronously with the write clock signal. The frequency **fw** of the write clock signal and the carrier frequencies **fsc** (=f1 through f9) satisfy the following equation (f1:n=1, f9:n=9):

$$\mathtt{fsc} = \mathtt{fw}/(\mathtt{n} \times 2^{\mathtt{m}})$$

where n=1, 2, 3, ... and 9 and n and m are natural numbers.

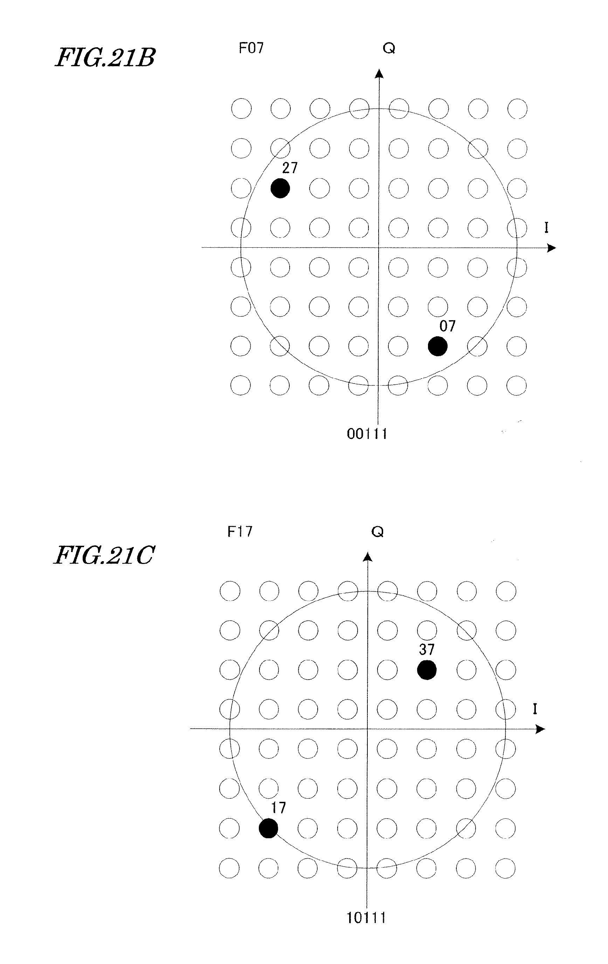

The frequency f1 through f9 sub-channel encoders **232** to **240** output the 64 QAM modulated waveform signals to an adder **231,** which outputs the sum as the orthogonal frequency division modulated signal **94** responsive to every pulse of the write clock signal. FIGS. **21B** and **21C** show portions of the 64 QAM modulation mapping. The alphanumeric code beginning with F (such as F07) indicates what part of the state transition table of the 5/6 recursive systematic convolutional code modulator **222** shown in FIG. **20C** is output. In FIGS. **21B** and **21C,** there are two outputs (solid black signal points) in a single mapping diagram because bit 4 has two values in FIG. **20B.** The orthogonal frequency division modulated signal **94** is input to the write compensation section **95.**

The write compensation section **95** is made up of the refractive index pattern calculator **96** and the write pulse intensity calculator **98.** The refractive index pattern calculator **96** receives the orthogonal frequency division modulated signal **94** and outputs a refractive index signal **97.** The write pulse intensity calculator **98** receives the refractive index signal **97** and outputs a write signal **99.**

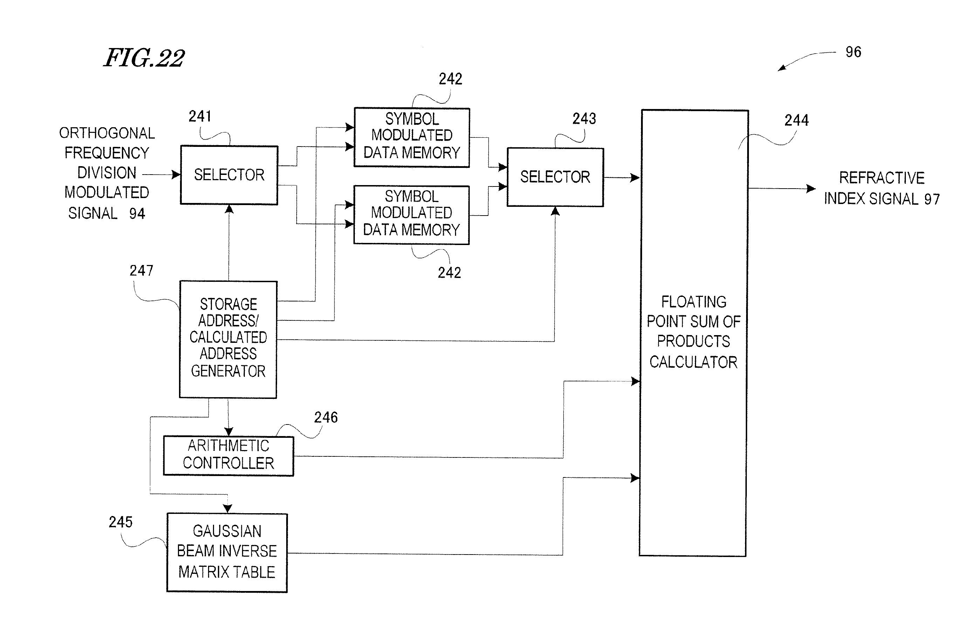

FIG. **22** shows the refractive index pattern calculator **96,** in which an inverse matrix of the read beam matrix has been calculated and stored in advance in a Gaussian beam inverse matrix value table **245.** By calculating the matrix product of the inverse matrix of the read beam matrix and the orthogonal frequency division modulated signal **94,** the refractive index signal can be figured out.

The input orthogonal frequency division modulated signal **94** is once stored in a symbol modulated data memory **242** by way of a selector **241.** The symbol modulated data memory **242** has double buffers. That is to say, while the orthogonal frequency division modulated signal **94** is being written on one symbol modulated data memory **242,** the other symbol modulated data memory **242** is calculating the refractive index pattern. The orthogonal frequency division modulated signal **94** that has been output from the symbol modulated data memory **242** is supplied to a floating point sum of products calculator **244** by way of a selector **243.**

The floating point sum of products calculator **244** performs floating point multiplications and additions and stores and outputs the results of the calculations so as to calculate the matrix products of the output values of the Gaussian beam inverse matrix value table **245** and the orthogonal frequency division modulated signal **94.** Data reading for the purpose of calculating the matrix products is controlled using the addresses output by a storage address/calculated address generator **247** to the symbol modulated data memory **242** and to the Gaussian beam inverse matrix value table **245**. The sum-of-products calculations are controlled in accordance with a sum-of-products calculation instruction issued by an arithmetic controller **246** to the floating point sum of products calculator **244**. When the matrix product has been calculated, the symbol modulated data memories **242** and the selector **243** are switched to calculate the matrix product of the orthogonal frequency division modulated signal stored in the other symbol modulated data memory **242**.

The refractive index signal **97** that has been output from the refractive index pattern calculator **96** is input to the write pulse intensity calculator **98**. Receiving the refractive index signal **97** and its associated orthogonal frequency division modulated signal **94,** the write pulse intensity calculator **98** solves the simultaneous equations shown in FIG. **19** (i.e., obtains A[k] shown in FIG. **19**), thereby outputting a write-compensated write signal **99.** In this example, the Newton-Lapson method is adopted to obtain A[k] shown in FIG. **19**.

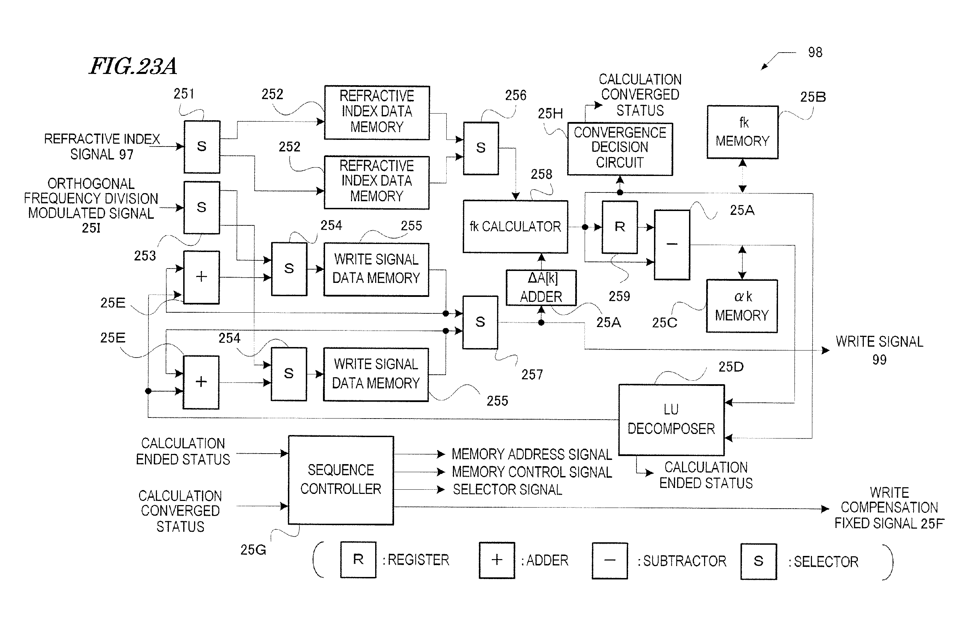

The write pulse intensity calculator **98** shown in FIG. **23A** is a hardware component for solving the Newton-Lapson equations using the orthogonal frequency division modulated signal as an initial value. The refractive index signal **97** that has been input to the write pulse intensity calculator **98** is written in a refractive index data memory **252** by way of a selector **251**. At the same time, an orthogonal frequency division modulated signal **25I**, generated by a timing regulator (not shown) based on the orthogonal frequency division modulated signal **94** and the refractive index signal **97,** is written on a write signal data memory **255** by way of selectors **253** and **254**. The orthogonal frequency division modulated signal **25I** is input as an initial value of the write signal. The data stored in the write signal data memory will be referred to herein as an "asymptotic write signal". The refractive index data memory **252** has double buffers, so does the write signal data memory **255**. That is to say, while the refractive index signal **97** is being written in one refractive index data memory **252,** the other memory is calculating the write signal. Also, while the orthogonal frequency division modulated signal **25I** is being written on one write signal data memory **255,** the other memory is calculating the write signal.

The refractive index signal that has been output from the refractive index data memory **252** is input to an fk calculator **258** by way of a selector **256**. The asymptotic write signal that has been output from the write signal data memory **255** is also input to the fk calculator **258** by way of a selector **257** and a ∆A[k] adder **25A**. The ∆A[k] adder **25A** adds zero or a predetermined constant to the asymptotic write signal in a prescribed sequence. That is to say, the write signal data memory outputs asymptotic write signals once (zero added) plus 256 times (A[k]) corresponding to one equation shown in FIG. **19**. Either zero or a predetermined constant is added to each asymptotic write signal value and the sum is input to the fk calculator **258,** which performs the left-side calculations of the simultaneous equations shown in FIG. **19** on the asymptotic write signal to which either zero or the predetermined constant has been added. In this example, the asymptotic write signal to which zero has been added is output first, and then the sums to which k=0 through 255 have been added are output sequentially.

The zero-added value that has been output from the **fk** calculator **258** is stored in a register **259** and written in an fk memory **25B**. A subtractor **25J** subtracts the fk calculated values of the following asymptotic write signals, to which ∆A[k] has been added, from the value stored in the register **259** and writes the remainders in an αk memory **25C**. 256 values corresponding to one equation shown in FIG. **19** are stored in the fk memory, while 65,536 (= 256 $\times$ 256) values are stored in the αk memory.

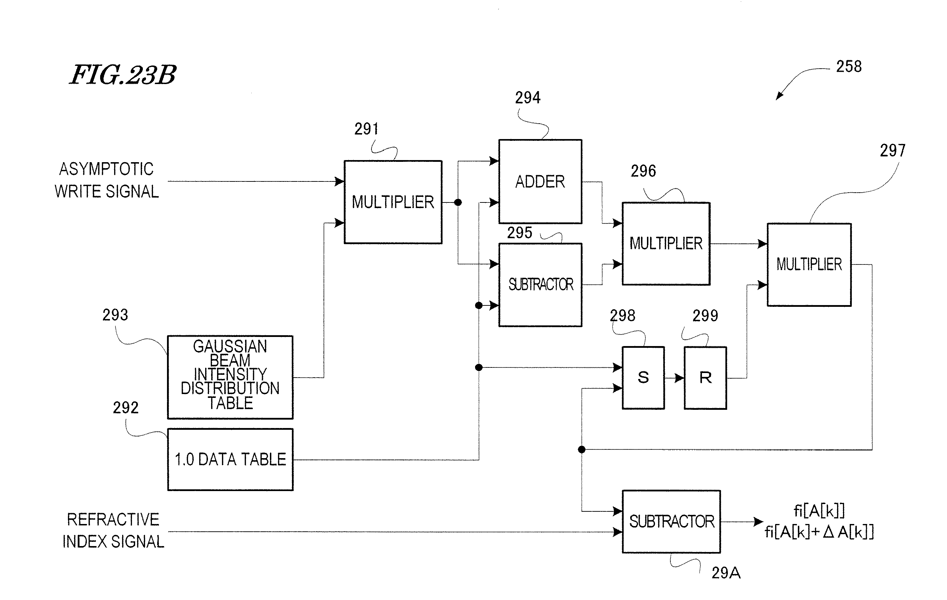

FIG. **23B** shows the fk calculator **258**. The input asymptotic write signal is supplied to a multiplier **291,** which multiplies the asymptotic write signal by a value that has been read out from a Gaussian beam intensity distribution table **293** in a predetermined sequence and outputs the product. This calculation corresponds to the A[k]$\times$g[L] portion shown in FIG. **19**. The output signal of the multiplier **291** is supplied to an adder **294** and a subtractor **295,** which respectively add and subtract a value of 1.0, supplied from a 1.0 data table **292,** to/from the signal supplied. And the resultant sum and remainder are input to, and multiplied together by, a multiplier **296**. This calculation corresponds to the 1-A[k]g[L]^2 portion shown in FIG. **19**. The output of the multiplier **296** is supplied to another multiplier **297,** which multiplies it by a value supplied from a register **299** and then outputs the product to a subtractor **29A** and to the register **299** by way of a selector **298**. The register **299** stores the result of the previous multiplication done by the multiplier **297** and has an initial value of 1.0, which has been supplied from the 1.0 data table **292** by way of the selector **298**. When multiplications for one symbol are done in a predetermined sequence, the subtractor **29A** subtracts the refractive index signal value from the output of the multiplier **297** and outputs the remainder.

When these operations are performed for one symbol, 256 fk values and 65,536 αk values for one symbol are output to an LUV decomposer **25D** that solves the following simultaneous equations including the fk and αk values:

$$-\mathrm{fk} = \alpha\mathrm{k} \times \mathrm{xk}$$

These equations will be 256 simultaneous equations. The resultant xk is input to an adder **25E,** which adds it to the asymptotic write signal stored in the write signal data memory **255**. Then, the resultant sum is written on the write signal data memory **255** again. As a result of this write operation, the value of the asymptotic write signal is updated to approach to the write-compensated write signal.

By repeatedly performing this calculation loop, the fk value goes closer and closer to zero, which means that the asymptotic write signal is approaching to the write compensated value. When a convergence decision circuit **25H** senses that the fk value is equal to or smaller than a predetermined value, this calculation loop ends, the write-compensated write signal **99** and a write compensation fixed signal **25F** are output, and the calculations are started all over again by switching to the other refractive index memory 255 and the other write signal data memory **255.**

The write signal **99** that has been output from the write compensation section **95** and the write clock signal **135** are supplied to a pulse laser driver **110,** which generates a pulse laser drive signal **111** based on the write signal **99** supplied. The pulse laser drive signal **111** is synchronous with the write clock signal **135.** The pulse laser diode **112** transforms the pulse laser drive signal **111** into a laser beam. Since the two-photon absorption recording requires a laser beam with very high peak power, the pulse width should be much smaller than one period of the write clock signal and may be about 1 ns, for example.

The laser beam emitted from the pulse laser diode **112** is transformed into a parallel beam by the collimator lens **113,** passed through the beam splitter **114** and the quarter wave plate **115,** and then incident on the objective lens **116.**

The objective lens **116** is controlled by the objective lens actuator **117** so as to focus the laser beam on the recording layer **119.** The laser beam that has been focused on the recording layer **119** changes the composition of the recording layer **119,** thereby varying the refractive index and writing data there.

In the foregoing description, every data is supposed to be floating point data. However, as long as the error can be estimated, calculations may also be done on fixed point data as well.

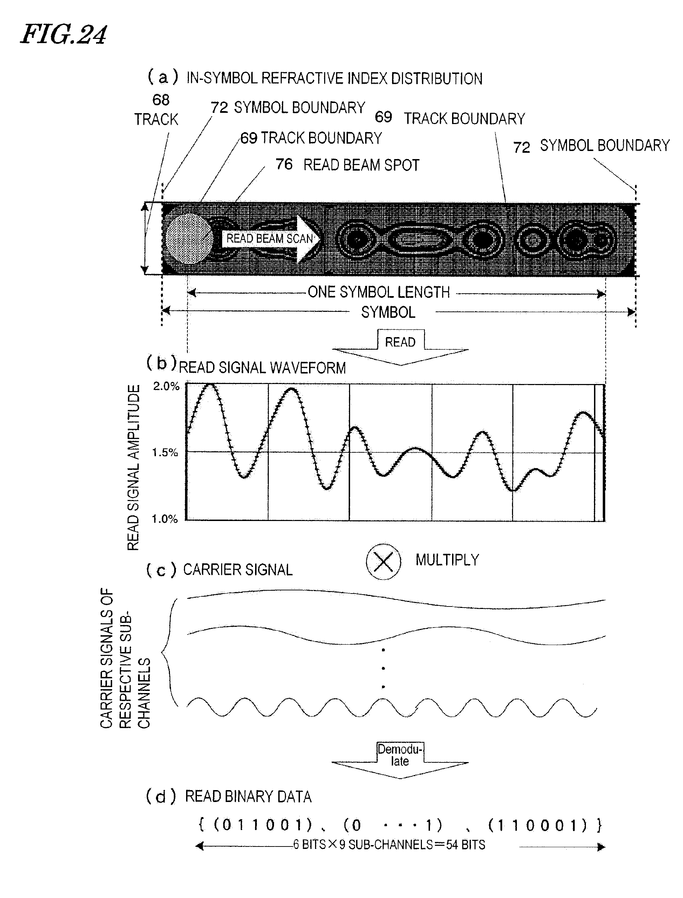

Next, a reading method according to the present invention will be described. FIG. **24** shows an optical reading method according to the present invention. Specifically, Portion **(a)** of FIG. **24** shows a refractive index pattern produced by the writing method shown in FIG. **8.** The binary data shown in portion **(d)** of FIG. **24** is read from this refractive index pattern. Hereinafter, the procedure of reading the stored binary data will be described with reference to portions **(a)** through **(d)** of FIG. **24** sequentially.

Portion **(a)** of FIG. **24** shows the refractive index pattern of a single symbol that is defined by symbol boundaries **72** and track boundaries **69.** In this symbol, also stored is binary data of 54 bits. The read beam spot **76** with its intensity fixed at a constant value moves along the centerline of the track **68** of this symbol. And by detecting the reflected light of this read beam spot **76,** a read signal waveform can be obtained.

Portion **(b)** of FIG. **24** shows the waveform of a read signal for one symbol. The length of this read signal waveform for one symbol (i.e., one symbol length) is different from the distance between the symbol boundaries. Portions **(a)** and **(b)** of FIG. **24** show the read signal and the location of the read beam in association with each other. One symbol length is the length of an interval during which a signal for one symbol is read or written. Also, one symbol length is the distance from the center of the beam reading the top portion of the read signal shown in portion **(b)** of FIG. **24** through that of the beam reading the end portion of that read signal. The distance between the symbol boundaries is a physical length where data is stored and is longer than the sum of the symbol length and the diameter of the write beam spot. This difference is caused because the write beam spot and the read beam spot have finite sizes.

By multiplying the read signal shown in portion **(b)** of FIG. **24** by the carrier signals of the sub-channels used during the write operation and shown in portion **(c)** of FIG. **24** and by integrated the products together within one symbol length, sub-channel data represented by these carrier signals can be read. In this case, the difference in frequency between the respective sub-channels of the read signal is the inverse number of the time representing one symbol length, i.e., a frequency corresponding to one symbol length. Consequently, only sub-channel data associated with the carrier signals can be read without interfering with each other.

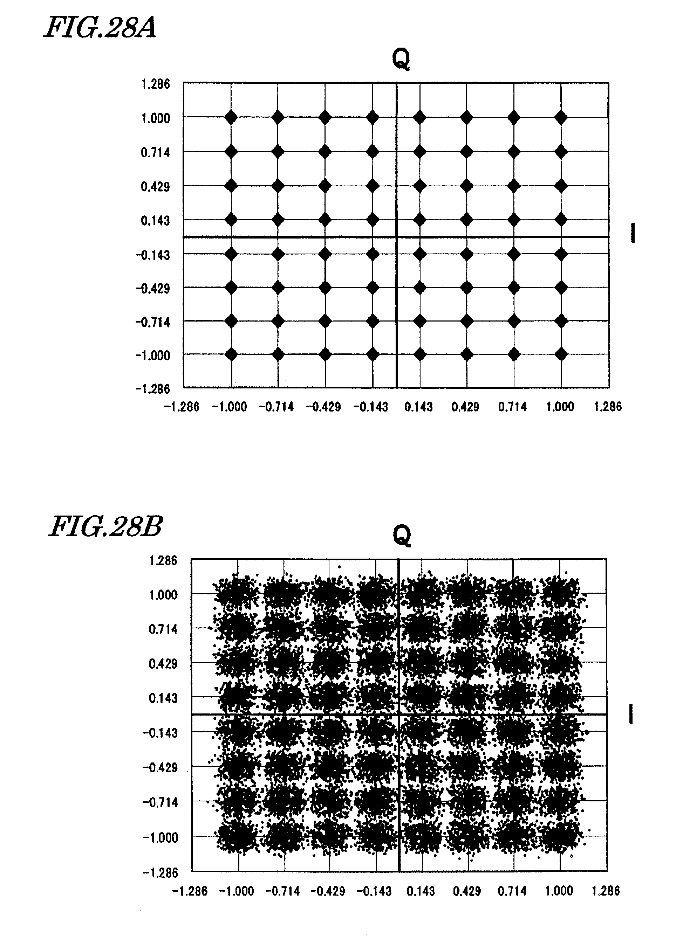

FIGS. **28A** and **28B** are signal arrangement diagrams plotted by multiplying the read signal shown in portion **(b)** of FIG. **24** by two carrier signals, of which the phases are different from each other by 180 degrees, integrating the products within one symbol length, and mapping the resultant two types of values to the axis of ordinates (Q-axis) and the axis of abscissas (I-axis), respectively. Specifically, FIG. **28A** is a signal arrangement diagram in an ideal playback state with no noise at all, while FIG. **28B** is a signal arrangement diagram in a situation where there is noise for a normal optical disk medium. The respective sub-channel signals have been subjected to the orthogonal amplitude modulation and the signal points are set on a sub-channel-by-sub-channel basis. Since the sub-channel signals have been modulated by the 64 QAM, there are 64 signal points. That is to say, one point represents six-bit data. Also, one point represents playback of one sub-channel. FIG. **28A** shows an ideal playback state, and therefore, includes 64 dotted signal points. These signal positions will be reference signal positions. FIG. **28B** is a signal arrangement diagram in a situation where noise has been superposed during the read operation. The read signal points have been expanded from the reference signal points shown in FIG. **28A** as their centers. Approximately 32,000 signal points are presented over the entire diagram shown in FIG. **28B.** Each of these read signal points can be converted into binary data by adopting the binary data value of a reference signal point that is closest to that signal point as the binary data value of that read signal point.

Portion **(d)** of FIG. **24** shows the read binary data. The six bits included in each pair of parentheses of this binary data represent the read data of one sub-channel and the read data of one symbol is included in the pair of braces.

Since one symbol has nine sub-channels overall, 54 bits are read.

If this binary data is generated as a turbo code or a low-density parity code, for example, robust error correction is realized and the recording density can be further increased substantially.

Hereinafter, the reading and writing methods of this preferred embodiment of the present invention will be further described.

When the reading method shown in FIG. **24** is carried out, it is very important to find the top of a symbol on the waveform of a read signal. If the symbol top thus detected has deviated, then the deviation will present itself as a phase offset, thus causing a read error.

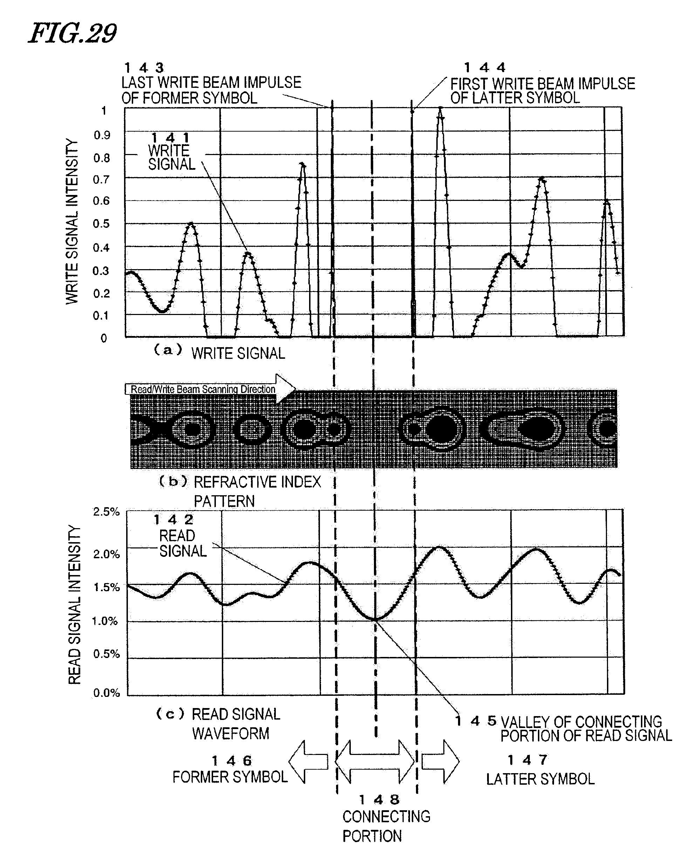

FIG. **29** shows a reading/writing method for detecting the top of a symbol. Specifically, portion **(a)** of FIG. **29** shows a write signal **141** that will produce a refractive index pattern to detect the top of a symbol. Portion **(b)** of FIG. **29** shows the resultant refractive index pattern when a write operation was performed using the write signal **141** shown in portion **(a)** of FIG. **29**. And portion **(c)** of FIG. **29** shows a read signal **142** obtained by reading the refractive index pattern shown in portion **(b)** of FIG. **29**. Portions **(a), (b)** and **(c)** of FIG. **29** show a symbol and portions located before and after the symbol connecting points with their on-track locations aligned with each other. On the left-hand side of FIG. **29**, shown is the tail portion of the former symbol **146.** In the middle of FIG. **29**, shown is a symbol-to-symbol connecting portion **148.** And on the right-hand side of FIG. **29**, shown is the head portion of the latter symbol **147** to be connected to the end of the former symbol **146** on the left-hand side. In the connecting portion **148**, the write signal **141** (shown in portion **(a)** of FIG. **29**) has a power of zero. That is to say, the connecting portion **148** is a non-recorded portion, of which the length needs to be equal to or greater than the diameter of a read beam spot. By scanning the refractive index pattern shown in portion **(b)** of FIG. **29** with a read beam, the read signal **142** is obtained. As can be seen from portion **(c)** of FIG. **29**, the center of the connecting portion **148** is aligned with the valley **145** of the connecting portion of the read signal. If the connecting portion **148** between the former and latter symbols **146** and **147** is a non-recorded portion, then the last write beam impulse **143** of the former symbol and the first write beam impulse **144** of the latter symbol have substantially the maximum value. The reason is as follows. Specifically, when the end portions of symbols are read using a refractive index pattern including a non-recorded portion between the symbols, a half of the read beam spot is formed in the non-recorded portion, and therefore, the read signal tends to have very small amplitude. That is why to maintain the amplitude of the read signal sufficiently high even at those end portions of the symbols, the power of the write beam impulses should be almost maximized. For that reason, the read signal in the symbol connecting portion **148** is symmetrical with respect to its centerline and the valley of the read signal is located on the centerline of the connecting portion **148.** Since the head of the latter symbol **147** or the tail of the former symbol **146** is fixed with respect to the center of the connecting portion **148,** the head of the latter symbol **147** or the tail of the former symbol **146** can be located by making calculations with respect to the center of the connecting portion **148.** The write compensation section **95** (see FIG. **7**) generates a write signal such that there is a non-recorded area of a predetermined length between the symbols as described above. Also, the write compensation section **95** generates a write signal such that the non-recorded area is located between areas irradiated with pulsed beams with almost the maximum power.

Optionally, a write signal, which has been subjected to write compensation with the powers of the last write beam impulse **143** of the former symbol and the first write beam impulse **144** of the latter symbol maximized from the beginning, may be generated to perform a write operation.

As described above, an area of a recording layer between two symbols includes a non-recorded area where no information is stored. The non-recorded area is interposed between two areas with a predetermined optical constant pattern. The demodulating section **104** locates the top of a symbol by reference to a signal component of a read signal representing the non-recorded area. Also, the demodulating section **104** generates a clock signal based on the signal representing the non-recorded area.

Hereinafter, it will be described in further detail how the optical disk drive **100** (see FIG. **7**) performs a read operation.

The demodulating section **104** includes a read circuit **128,** an orthogonal frequency division demodulator **131,** and a turbo code demodulator **133.** During reading, the pulse laser driver **110** controls the pulse laser diode **112** such that the laser diode **112** has continuous and constant optical power. However, its power is much smaller than the laser power for writing. The laser beam emitted from the pulse laser diode **112** is transformed into a parallel beam by the collimator lens **113,** transmitted through the beam splitter **114** and the quarter-wave plate **115,** and then incident on the objective lens **116.**

The objective lens **116** is controlled by the objective lens actuator **117** so as to focus the laser beam on the recording layer **119.** Unlike writing, the laser beam that has been focused on the recording layer **119** is too weak to change the composition of the recording layer **119.** The laser beam that has been reflected from the recording layer **119** is transmitted through the objective lens **116** and the quarter-wave plate **115,** reflected by the beam splitter **114,** and then condensed by the condenser lens **121** onto the group of photosensors **122.** The group of photosensors **122** output not only a focus sensor error signal **123** and a tracking sensor error signal **124,** but also an analog read signal **125** as a sum of these sensor signals. The focus sensor error signal **123** and the tracking sensor error signal **124** are input to the servo circuit **126,** which outputs the actuator drive signal **127** to the objective lens actuator **117,** thereby controlling the objective lens actuator such that the laser beam is focused on the recording layer and that the laser beam spot is located right on the target track.

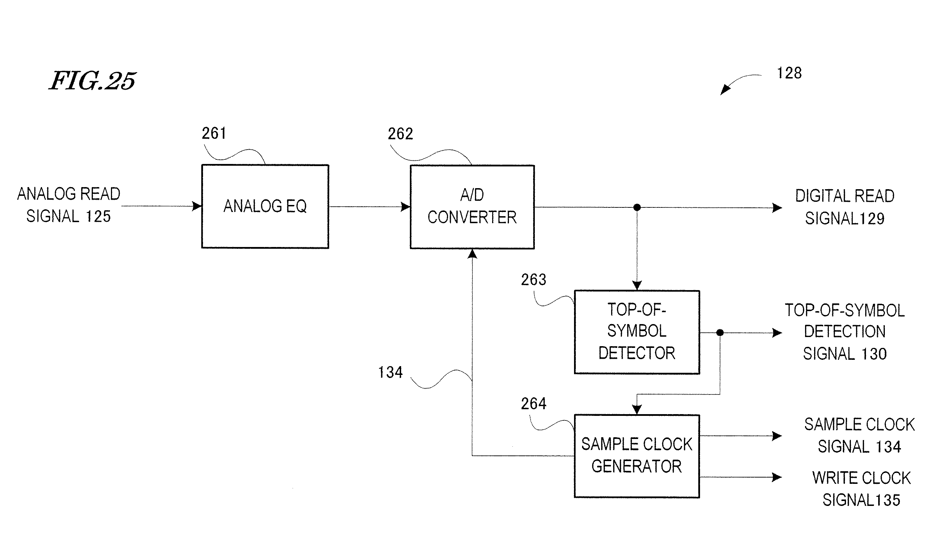

The analog read signal **125** is input to the read circuit **128.** FIG. **25** shows the read circuit **128.** The incoming analog read signal **125** is supplied to an analog EQ **261,** where the signal has its low-frequency noise reduced and also has its high-frequency components boosted, and then input to an A/D converter **262.** In response to a sample clock signal **134,** the A/D converter **262** converts an analog value into a digital one, i.e., outputs a digital read signal **129.** The digital read signal **129** is also input to a top of symbol detector **263,** which detects a particular pattern that has been recorded at the top of each symbol, thereby outputting a top-of-symbol detection signal **130,** which is supplied to a sample clock generator **264.** The sample clock generator **264** outputs not only a sample clock signal **134,** of which the phase is in sync with the timing of top-of-symbol detection, to the A/D converter and other circuits but also a write clock signal **135** to circuits on the writing section.

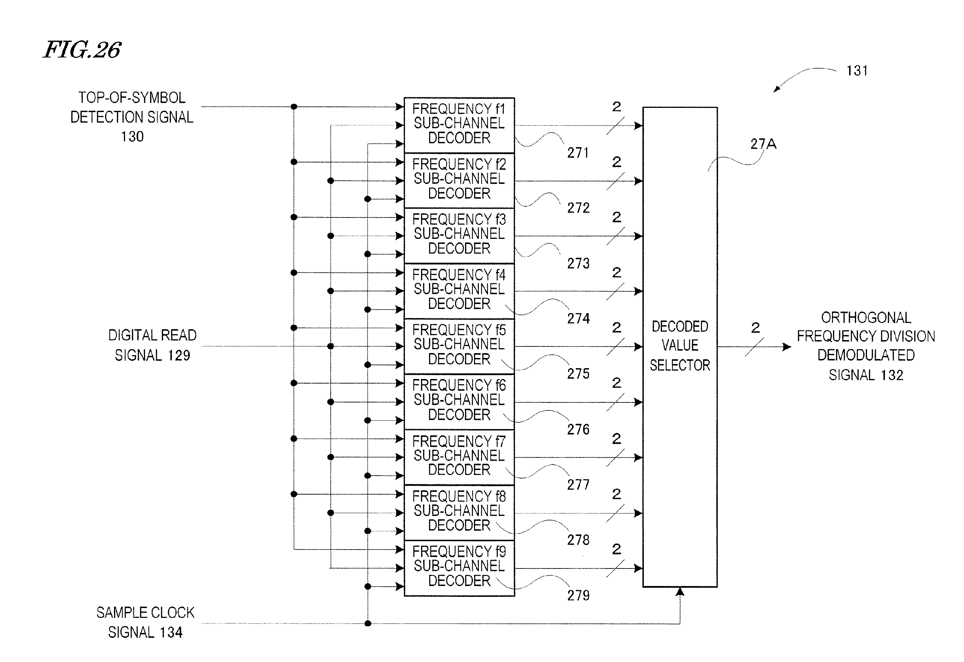

The digital read signal **129** that has been output from the read circuit 128 is supplied to the orthogonal frequency division demodulator **131.** FIG. **26** shows the orthogonal frequency division demodulator **131.**

The incoming digital read signal **129,** along with the top-of-symbol detection signal 130 and the sample clock signal **134** (which is an operating clock signal for the orthogonal frequency division demodulator **131**), is input to frequency f1 through f9 sub-channel decoders **271** through **279,** each of which performs a Hilbert transform on a carrier with an associated one of the frequencies **f1** through **f9** by reference to the top-of-symbol detection signal 130, thereby carrying out the 64 QAM demodulation and outputting two signals with I and Q values. The sample clock frequency **fp** and the carrier frequency **fsc** (=one of f1 through f9) satisfy the following Equation (in which n=1 for f1 and n=9 for f9):

$$\mathtt{fsc}{=}\mathtt{fp}/(\,\mathtt{n}{\times}2^{\mathtt{m}}\,)$$

where is n is a natural number and n=1, 2, 3 ..., or 9 and m is also a natural number.

The 64 QAM demodulated data I and Q values are output from the frequency f1 through f9 sub-channel decoders **271** through **279** to a decoded value selector **27A,** which selectively and sequentially supplies the outputs of the frequency f1 through f9 sub-channel decoders **271** through **279.** This output signal will be an orthogonal frequency division demodulated signal **132.**

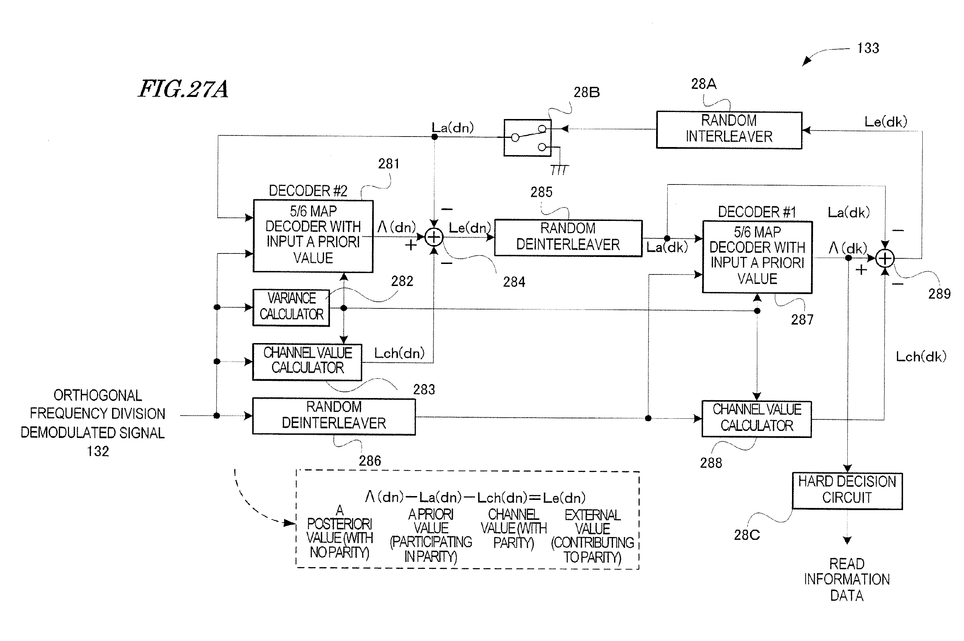

The orthogonal frequency division demodulated signal **132** is output from the orthogonal frequency division demodulator **131** to the turbo code demodulator **133.** FIG. **27A** shows the turbo code demodulator **133.** Hereinafter, it will be described how the turbo code demodulator **133** operates.

The incoming orthogonal frequency division demodulated signal **132** is supplied to decoder #2 **281,** a channel value calculator **283,** a variance value calculator **282,** and a random deinterleaver **286.**

The decoder #2 **281** performs maximum a posteriori probability (MAP) decoding on the incoming series of orthogonal frequency division demodulated signal **132** corresponding to one turbo codeword, thereby outputting a posteriori probability on a data-by-data basis. In this case, the series of orthogonal frequency division demodulated signal **132** is input as a series coming from the 5/6 recursive systematic convolutional code modulator **224.** That is why the parities are input in the order in which the data has been interleaved. In the following description, the order of this series will be identified by n and the data of this series by dn. In the same way, as for the series of data to which parities have been added from the series coming from the 5/6 recursive systematic convolutional code modulator **222,** the order of the series will be identified by k and the data of the series by dk.

The variance value calculator **282** calculates a Euclidean distance from the incoming orthogonal frequency division demodulated signal **132** to its closest signal point, figures out a variance value, and outputs it to the decoder #2 **281,** the channel value calculator **283,** decoder #1 **287** and a channel value calculator **288.** When decoding is performed for the first time, zero is input from the selector **28B** as a priori probability for the decoder #2 **281.** That is to say, a priori probability becomes zero, which is not used for MAP decoding.

The channel value calculator **283** calculates, for each dn, a probability that the orthogonal frequency division demodulated signal **132** is the data dn. In this case, the orthogonal frequency division demodulated signal **132** is supposed to have a Gaussian distribution and is calculated based on the variance value supplied from the variance value calculator **282** and the Euclidean distance from the orthogonal frequency division demodulated signal **132** to each signal point.

The output $\Lambda$ (dn) of the decoder #2 **281** and the output Lch(dn) of the channel value calculator **283** are subjected to the following calculation to derive an external value Le(dn):

$$\Lambda(\mathtt{dn})-\mathtt{La}(\mathtt{dn})-\mathtt{Lch}(\mathtt{dn})=\mathtt{Le}(\mathtt{dn})$$

When this calculation is done for the first time, a priori probability is zero. That is why La(dn)=0.

The external value calculated is deinterleaved by a random deinterleaver **285** and converted into the series of La(dk), which is used as a priori probability for the decoder #1 **287** and is supplied to a priori probability input terminal of the decoder #1.

The series of deinterleaved orthogonal frequency division demodulated signal **132** that have been output from the random deinterleaver **286** at the same time are supplied to the decoder #1 **287** and the channel value calculator **288.**

The decoder #1 **287** performs maximum a posteriori probability (MAP) decoding on the series of deinterleaved orthogonal frequency division demodulated signal **132,** corresponding to one turbo codeword and supplied from the random deinterleaver **286,** and a priori probability La(dk) supplied from the random deinterleaver **285,** thereby outputting a posterior probability Λ (dk). In this case, the series of deinterleaved orthogonal frequency division demodulated signal **132** is input as a series coming from the 5/6 recursive systematic convolutional code modulator **222.** That is why the parities are input in the order of the data.

The channel value calculator **288** calculates, for each dk, a probability that the orthogonal frequency division demodulated signal **132** is the data dk. In this case, the orthogonal frequency division demodulated signal **132** is supposed to have a Gaussian distribution and is calculated based on the variance value supplied from the variance value calculator **282** and the Euclidean distance from the deinterleaved orthogonal frequency division demodulated signal **132** to each signal point.

The output Λ (dk) of the decoder #1 **287,** the output Lch(dk) of the channel value calculator **288** and a priori probability La(dk) supplied from the random deinterleaver 285 are subjected to the following calculation to derive an external value Le(dk):

$$\wedge(dk) - La(dk) - Lch(dk) = Le(dk)$$

The external value calculated is interleaved again by a random interleaver **28A** so as to be converted into the series of La(dn), which is used as a priori probability for the decoder #2 **281** and is input to a priori probability input terminal of the decoder #2 **281** by way of a selector **28B.**

The decoder #2 **281** calculates a posteriori probability A (dn) again based on the incoming a priori probability La(dk) and the intermediate data (γ value) of previous MAP decoding, which is stored in the decoder #2 **281.** As in the previous time, the decoder #2 **281** makes the following calculation to derive an external value Le(dk) and outputs it to the random deinterleaver **285** again.

$$\wedge(dn) - La(dn) - Lch(dn) = Le(dn)$$

It should be noted that La(dn) is the data that has been input to the decoder #2 **281** and the channel value Lch(dn) is the same data as the previous time.

When the difference between La(dk) and its previous value becomes equal to or smaller than a predetermined value by performing decoding recursively a prescribed number of times, a hard decision circuit **28C** outputs **dk** that has the highest a posteriori probability in the respective words received.

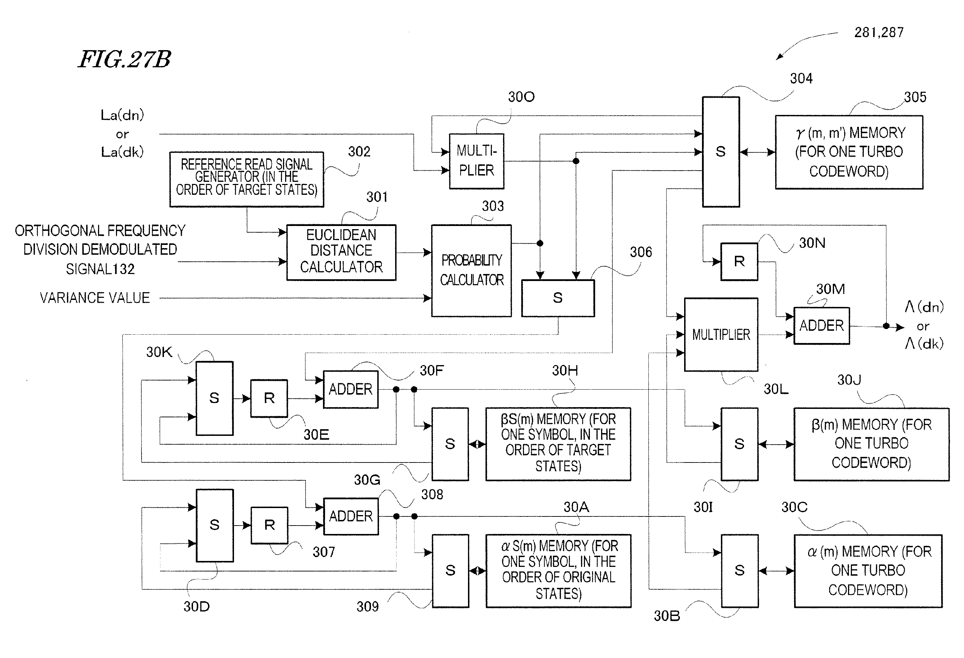

Next, it will be described in detail how the decoders #1 and #2 operate. FIG. **27B** shows the decoders #1 and #2, which have the same configuration but are different in the order of data included in the incoming orthogonal frequency division demodulated signal **132,** for example, i.e., whether the data has been interleaved (dn) or not (dk). Also, processing is carried out on a turbo codeword basis. Hereinafter, the operation to be performed when a new turbo codeword is input to the decoder #2 will be described.

(Step 11) The incoming orthogonal frequency division demodulated signal **132** is supplied to a Euclidean distance calculator **301,** which calculates and outputs a Euclidean distance from the input orthogonal frequency division demodulated signal **132** to a reference read signal (i.e., a read signal with no errors), which has been generated by a reference read signal generator 302 in a predetermined order for every state produced as a result of the transition. In a 5/6 recursive systematic convolutional code, there are 32 states. Thus, 32 × 32 = 1,024 different Euclidean distances (i.e., all outputs shown in FIG. **20C**) are calculated and output for a set of orthogonal frequency division demodulated signal **132.**

The reference read signal generator **302** sequentially outputs signals rightward from F00 of the combination of the target state "00" and original state "00" shown in FIG. **20C.** When the target state "00" is finished, the generator **302** starts outputting the signals by moving to the target state "10" on the lower table shown in FIG. **20C.** In this manner, the reference read signal generator **302** alternately outputs the signals from the upper table and from the lower table on a row-by-row basis. And when the signals have been output through the end of the state "1f" on the lowermost row, the orthogonal frequency division demodulated signals for one symbol will have been output. When the next symbol is input, the signals are output in the same sequence all over again.

This turbo code is punctured alternately. The punctured portions are different parity bits of multiple codewords. That is why as for the punctured portion, the average of the probability when the parity bit is "0" and the probability when the parity bit is "1" is output as the probability described above. The upper table shown in FIG. **20C** is associated with the parity bit "0", while the lower table shown in FIG. **20C** is associated with the parity bit "1". For that reason, after the parity bits "0" and "1" of the upper and lower tables have been calculated and the average of the probability when the parity bit is "0" and the probability when the parity bit is "1" has been figured out for the punctured portion, the Euclidean distance calculator **301** outputs the Euclidean distance calculated.

(Step 12) The Euclidean distance thus obtained, supplied from the Euclidean distance calculator **301,** is converted into a probability value based on the variance value supplied from the variance value calculator **282** and the Euclidean distance and then output by regarding the orthogonal frequency division demodulated signal 132 as having a Gaussian distribution.

(Step 13) The orthogonal frequency division demodulated signal that has been converted into a probability value gets stored in a $\gamma$ (m, m') memory 305 by way of a selector **304**. The $\gamma$ (m, m') memory 305 retains the probability of transition from respective states for one turbo codeword into all states.

(Step 14) The orthogonal frequency division demodulated signal that has been converted into a probability value is also input to an adder **308** by way of a selector **306.**

The adder **308** adds together the probability value and the output of a register **307** and outputs the sum. The probability value that has been added is input to, and stored in, the register **307** by way of a selector **30D**. Thus, the output value of the register **307** becomes equal to that of the previous adder. The register **307** is reset every time the probability value of the first orthogonal frequency division demodulated signal of a turbo codeword to a symbol has been input and the target states are changed. That is why the sum of the probability values that have been input for the respective target states is output. The sum of the probability values for the respective target states is output from the adder **308,** passed through selectors **309** and **30B,** and then stored in an $\alpha$S(m) memory **30A** and an $\alpha$(m) memory **30C,** respectively. The $\alpha$S(m) memory **30A** stores the sum of the probabilities of transition from respective states of the orthogonal frequency division demodulated signal for one symbol into a single state. The $\alpha$(m) memory **30C** stores the sum of the probabilities of transition from respective states of the orthogonal frequency division demodulated signal for one symbol into a single state.

If the probabilities of the second or posterior orthogonal frequency division demodulated signal of a turbo codeword to a symbol are input, the values that have been stored in the order of transition in the register 307 by way of the $\alpha$S(m) memory **30A** and selector **30D** are reset every time the target states are changed. Then, these values are used as initial values and added again by the adder, thereby updating the sum of the respective target state probability values.

(Step 15) When these processing steps are performed for one turbo codeword, the sum of the transition probabilities from the top of the turbo codeword through the state of each dn are stored in the $\alpha$(m) memory. On the other hand, all transition probabilities within a single turbo codeword are stored in the $\gamma$ (m, m') memory 305.

(Step 16) The data stored in the $\gamma$ (m, m') memory **305** is read out reversely to the order of input of the orthogonal frequency division demodulated signals **132** and sequentially on a transition-by-transition basis. Specifically, in FIG. **20C,** the transition probabilities are read downward from the probability associated with the F00 output of the original state "00" through that associated with the target state "0f". Next, the transition probabilities of the original state "01" are read and output from the probability associated with the F01 output of the target state "10" through that associated with the target state "1f". Thereafter, the transition probabilities of the original state "02" are output in the same way.

(Step 17) The outputs of the $\gamma$ (m, m') memory **305** are supplied to an adder **30F** by way of the selector **304**. As in the $\alpha$S(m) memory, the symbol of the orthogonal frequency division demodulated signal input to the adder **30F** for the first time is added by resetting the value of the register **30E** to zero every time the original states are changed. As for the second symbol to be added and symbols that follow it, the sum for each original state stored in the $\beta$ S(m) memory is loaded into the register **30E** and used as the initial value for addition every time the original states are changed.

(Step 18) When these processing steps are performed for one turbo codeword, the sum of the transition probabilities from the top of the turbo codeword through the state of each dn are stored in the $\beta$(m) memory.

(Step 19) For all combinations of transitions m→m' for the zeroth symbol d0=0, the sum of the products $\alpha$(m) $\times \gamma$ (m, m') $\times \beta$(m) is calculated. The sum of the probabilities for d0=0 is input from the $\alpha$(m) memory 30C to the multiplier **30L** by way of the selector **30B**. The transition probabilities for d0=0 are input from the $\gamma$ (m, m') memory 305 to the multiplier **30L.** And the sum of the probabilities for d0=0 is input from the $\beta$ (m) memory **30J** to the multiplier **30L.** In response, the multiplier 30L multiplies together these input values. And the product and the value stored in a register **30N** are added together by an adder **30M.** The value of the register **30N** is retained until the input to the multiplier 30L is changed from dn=0 and is reset when dn=1. That is why the output value of the adder **30M** becomes the sum of the values that have been added while dn=0.

(Step 20) The processing step **19** is performed on each symbol from dn=0 through dn=31 (i.e., for one turbo codeword).

Next, it will be described what if the orthogonal frequency division demodulated signal is input to the decoder #1 or what if a turbo codeword is input to the decoder #2 from the second round on. Hereinafter, it will be described how the decoder #2 operates. The decoders #1 and #2 have the same configuration but are different in the order of data included in the incoming orthogonal frequency division demodulated signal **132,** for example, i.e., whether the data has been interleaved (dn) or not (dk).

(Step 21) A priori value La(dn) is input to the multiplier **300.** At the same time, a transition probability for dn is input from the $\gamma$ (m, m') memory **305** to the multiplier **300** by way of the selector **304.** There are $32 \times 32 = 1,024$ transition probabilities (i.e., all shown in FIG. 20C) for dn. And all of those probabilities and a priori value La(dn) are multiplied together by the multiplier 300 and the products are output. The transition probabilities are read from the $\gamma$ (m, m') memory **305** in the same order as that of the reference read signal generated by the reference read signal generator **302.** That is to say, the transition probabilities are sequentially output rightward from F00 of the combination of the target state "00" and original state "00" shown in FIG. **20C.** When the target state "00" is finished, the transition probabilities start to be output by moving to the target state "01". And when the probabilities have been output through the end of the state "1f" on the lowermost row, the orthogonal frequency division demodulated signals for one symbol will have been output. When the next symbol is input, the signals are output in the same sequence all over again.

(Step 22) The product calculated by the multiplier **300** gets stored in the $\gamma$ (m, m') memory **305** by way of the selector **304.** In the $\gamma$ (m, m') memory **305,** the probability of transition from each of the states for one turbo codeword into every state is updated. After that, the same operation as that of step 14 is carried out.

In the foregoing description, every data is supposed to be floating point data. However, as long as the error can be estimated, calculations may also be done on fixed point data as well.

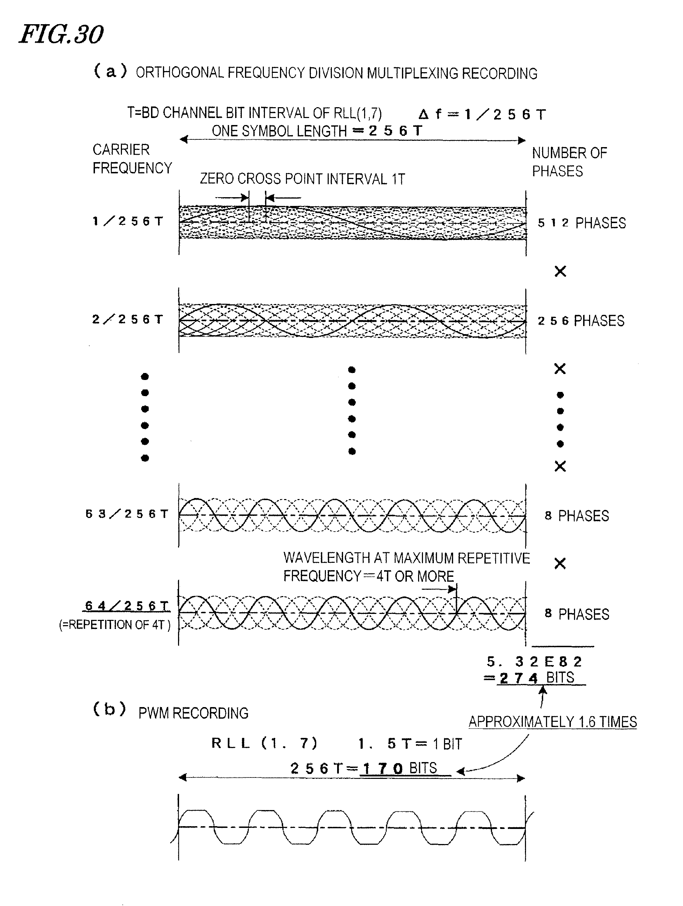

Next, the recording density achieved by the writing method of the present invention and that of the PWM recording, which is a conventional writing method, will be compared to each other with reference to FIG. **30.** Portion **(a)** of FIG. **30** shows the estimated recording density achievable by the writing method of the present invention. It is estimated how much data can be stored with one channel bit for a BD supposed to be T and one symbol length supposed to be 256 T. Phase modulation is adopted as a method of modulation. The highest carrier frequency is supposed to be equal to the highest iterative frequency (of 1/4 T) for a BD. And the phase interval of the phase modulation is supposed to be equal to the detection interval of 1 T for a BD. Also, since the symbol length is 256 T, the carrier frequency intervals between the respective sub-channels are supposed to be 1/256 T, i.e., the inverse number of the symbol length.

The uppermost graph of portion **(a)** of FIG. **30** shows the number of phases that a sub-channel with the lowest carrier frequency can have. The phases are detected where the sub-channel signal has zero amplitude, i.e., at so-called zero-cross points. The wavelength of this carrier is 256 T. Thus, there can be 256 zero-cross points for one wavelength. A single zero-cross point may be crossed by a sub-channel signal either downward or upward, thus causing two phases. Consequently, this sub-channel can have 512 phases. In the same way, a sub-channel with the second lowest carrier frequency has 256 phases. After that, 64 sub-channels can be superposed one upon the other up to a carrier frequency of 64/256 T. These phases become the product of the numbers of phases of the respective sub-channels. Thus, the total number of phases for one entire symbol is $5.32 \times 10^{82}$, which corresponds to information of 274 bits.

In portion **(b)** of FIG. **30,** the number of bits that can be stored in 256 T by the PWM recording, which is a conventional writing method, is calculated. Supposing a write operation is performed by the RLL (1, 7) method, one bit is stored for 1.5 T, and therefore, 170 bits of information can be stored for 256 T.

As described above, 274 bits can be stored for 256 T according to the writing method of the present invention, whereas only 170 bits can be stored according to the conventional PWM recording method. Consequently, the recording density achieved by the writing method of the present invention can be approximately 1.6 times as high as that achieved by the conventional method.

In the two-photon absorption recording, the variation in the optical constant of the recording material is a quadratic function of the intensity of a write beam, and therefore, the recording pattern can be controlled three-dimensionally. That is why if this method is applied to three-dimensional recording on an optical disk medium with multiple recording layers, for example, the recording density can be further increased.

It should be noted that the operation performed by the optical disk drive **100** described above could be realized by means of software at least partially. For example, the optical disk drive **100** may include a memory device to store a program for performing the operations of the respective components described above and a central processing unit (CPU) that reads and executes the program. The optical disk drive 100 performs the operation described above following the program. The program may be either stored in advance in the memory device or downloaded and installed, for example.

**INDUSTRIAL APPLICABILITY**

The present invention is particularly effectively applicable for use in the field of reading and writing information from/on information storage media.

**Claims**

1.   An apparatus comprising
a write compensation section, which generates a write signal to write information on an information storage medium, and
a writing section for irradiating the information storage medium with a pulsed beam based on the write signal generated by the write compensation section,
wherein the information storage medium includes a recording layer, which has an optical constant that changes continuously with the total quantity of light received, and
wherein the writing section radiates and condenses multiple pulsed beams on the recording layer at an interval that is shorter than the diameter of the pulsed beams on the recording layer, and
wherein the write compensation section generates the write signal such that the each sum of variations in the optical constant at each irradiated spot of the pulsed beam on the recording layer through the end of a write operation forms a predetermined variation pattern.

2.   The apparatus of claim 1, wherein the optical constant is a refractive index.

3.   The apparatus of claim 2, wherein the refractive index varies in response to a two-photon absorption reaction of the material of the recording layer, and
wherein the probability of the two-photon absorption reaction is proportional to the square of the intensity of the pulsed beam.

4.   The apparatus of claim 2, wherein the refractive index varies as the molecules of the recording layer change their directions perpendicularly to the plane of polarization of the pulsed beam, and
wherein the probability of change of the directions of the molecules is proportional to the square of the intensity of the pulsed beam.

5.   The apparatus of claim 2, wherein the refractive index varies in response to a one-photon absorption reaction of the material of the recording layer, and
wherein the probability of the one-photon absorption reaction is proportional to the intensity of the pulsed beam.

6.   The apparatus of claim 2, wherein the refractive index varies as the molecules of the recording layer change their directions perpendicularly to the plane of polarization of the pulsed beam, and
wherein the probability of change of the directions of the molecules is proportional to the intensity of the pulsed beam.

7.   The apparatus of claim 3 or 5, wherein the material is diarylethene.

8.   The apparatus of claim 4 or 6, wherein the recording layer includes photoaddressable polymers (PAPs).

9.   The apparatus of claim 1, further comprising a modulating section for generating a signal representing the information by combining a plurality of sub-channel signals with each other,
wherein the information is written on the basis of a symbol with a predetermined length, and
wherein a difference in frequency between carrier signals of the sub-channel signals is an integral multiple of the product of the spatial frequency of the symbol and a relative velocity of a beam spot with respect to the information storage medium.

10.  The apparatus of claim 9, wherein the sub-channel signals have been subjected to phase modulation and the number of phase divisions is defined for each said sub-channel.

11.  The apparatus of claim 9, wherein the sub-channel signals have been subjected to orthogonal amplitude modulation and a signal point is set for each said sub-channel.

**12.** The apparatus of claim 9, wherein the write compensation section generates the write signal such that there is a non-recorded area with a predetermined length between the symbols.

**13.** The apparatus of claim 12, wherein the write compensation section generates the write signal such that the non-recorded area is located between areas irradiated with a pulsed beam with prescribed power.

**14.** The apparatus of claim 1, wherein the information storage medium comprises a plurality of recording layers including the recording layer.

**15.** An apparatus for generating a write signal to write information on an optical disk medium in the cast of use in an optical disk drive for writing data on the optical disk medium,
wherein the optical disk drive includes a writing section for irradiating the optical disk medium with a pulsed beam based on the write signal,
wherein the optical disk medium includes a recording layer, which has an optical constant that changes continuously with the total quantity of light received, and
wherein the writing section radiates and condenses multiple pulsed beams on the recording layer at an interval that is shorter than the diameter of the pulsed beams on the recording layer, and
wherein the apparatus generates the write signal such that the each sum of variations in the optical constant at each irradiated spot of the pulsed beam on the recording layer through the end of a write operation forms a predetermined variation pattern.

**16.** A writing method comprising the steps of:

generating a modulation signal to write encoded information on an information storage medium; and
irradiating the information storage medium with a pulsed beam based on the write signal generated by a write compensation section,

wherein the information storage medium includes a recording layer, which has an optical constant that changes continuously with the total quantity of light received, and
wherein the step of irradiating includes radiating and condensing multiple pulsed beams on the recording layer at an interval that is shorter than the diameter of the pulsed beams on the recording layer, and
wherein the step of generating the write signal includes generating the write signal such that the each sum of variations in the optical constant at each irradiated spot of the pulsed beam on the recording layer through the end of a write operation forms a predetermined variation pattern.

**17.** A program set up to make an apparatus for writing data on an information storage medium perform recording processing,
wherein the recording processing includes the steps of:

generating a modulation signal to write information on the information storage medium; and
irradiating the information storage medium with a pulsed beam based on the write signal generated by a write compensation section,

wherein the information storage medium includes a recording layer, which has an optical constant that changes continuously with the total quantity of light received, and
wherein the step of irradiating includes radiating and condensing multiple pulsed beams on the recording layer at an interval that is shorter than the diameter of the pulsed beams on the recording layer, and
wherein the step of generating the write signal includes generating the write signal such that the each sum of variations in the optical constant at each irradiated spot of the pulsed beam on the recording layer through the end of the recording processing forms a predetermined variation pattern.

**18.** An apparatus for reading information from an information storage medium,
wherein the information storage medium includes a recording layer, which has an optical constant that changes continuously with the total quantity of light received, and
wherein the information has been stored on the recording layer as a combination of a plurality of sub-channel signals, and
wherein the apparatus comprises:

a reading section, which irradiates the recording layer with a beam to generate a read signal based on the light that has been reflected from the information storage medium; and

a demodulating section, which multiplies the read signal and each of carrier signals together to generate each of sub-channel signals, associated with the respective carrier signal, and detect the information based on the sub-channel signals.

19. The apparatus of claim 18, wherein the information has been stored on the recording layer on the basis of a symbol with a predetermined length, and

wherein there is a non-recorded area that stores no information between the symbols of the recording layer, and wherein the demodulating section detects the top of the symbol by reference to a signal indicating the non-recorded area in the read signal.

20. The apparatus of claim 19, wherein the demodulating section generates a clock signal based on the signal indicating the non-recorded area.

21. The apparatus of claim 19, wherein the non-recorded area is interposed between areas with a predetermined optical constant pattern.

22. An information storage medium comprising a base material and a recording layer for storing information,

wherein the information is stored in the recording layer on the basis of a symbol with a predetermined length, and wherein there is a non-recorded area that stores no information between the symbols of the recording layer.

23. The information storage medium of claim 22, wherein the recording layer has an optical constant that changes continuously with the total quantity of light received, and

wherein the non-recorded area is interposed between areas with a predetermined optical constant pattern.

## FIG.1

15 AREA A

11 OPTICAL DISK

13 TRACK BOUNDARY

14 WRITE BEAM SPOT

12 TRACK

12 TRACK

12 TRACK

WRITE BEAM SCAN

16 AREA A

# FIG.2

ON-TRACK LOCATION

(a) BINARY DATA

| 0 | 1 | 1 | 0 | 0 | 1 | 1 | 1 |
|---|---|---|---|---|---|---|---|

Trans-form

(b) RECORDING CODE

| 0 | 1 | 1 | 1 | 0 | 0 | 0 | 1 | 1 | 1 | 0 | 0 |
|---|---|---|---|---|---|---|---|---|---|---|---|

Write Compensation

(c) WRITE SIGNAL

Write

(d) ON-TRACK REFLECTANCE DISTRIBUTION

1 2 TRACK        1 3 TRACK BOUNDARY

1 3 TRACK BOUNDARY

# FIG.3

**1 2**
TRACK

**( a )  ON-TRACK REFLECTANCE DISTRIBUTION**

READ BEAM SCAN

**3 1**
READ BEAM
SPOT

**1 3**  TRACK BOUNDARY

READ

**( b )  READ SIGNAL WAVEFORM**

AMPLITUDE (ARBITRARY UNIT)

DIGITIZE

**( c )  READ DIGITIZED DATA**

| 0 | 1 | 1 | 1 | 0 | 0 | 0 | 1 | 1 | 1 | 0 | 0 |
|---|---|---|---|---|---|---|---|---|---|---|---|

INVERSELY TRANSFORM

**( d )  READ BINARY DATA**

| 0 | 1 | 1 | 0 | 0 | 1 | 1 | 1 |
|---|---|---|---|---|---|---|---|

## FIG.4A

4 2 TRACK GROOVE

ENLARGE

4 1
OPTICAL DISK

4 3   TRACK CENTER

3 1   READ BEAM SPOT

## FIG.4B

4 5 TRACK GROOVE

ENLARGE

4 4
OPTICAL DISK

4 3 TRACK CENTER

3 1  READ BEAM SPOT

## FIG.5A

## FIG.5B

5 3 CENTER OF TIME UNIT

PIT SHAPE

READ SIGNAL AMPLITUDE

5 1 SINGLE TIME UNIT LENGTH T

5 2 ONE SYMBOL LENGTH

SINGLE TIME UNIT LENGTH T (ENLARGED)

5 1 SINGLE TIME UNIT LENGTH T

WRITE SIGNAL AMPLITUDE

-nl    -(w+1) -w    -2  -1  1  2    w  w+1    nl

**FIG.6**

( a ) OPTICAL STORAGE MEDIUM FORMAT

← LASER BEAM →

6 6  OBJECTIVE LENS

6 5
AREA B

6 1  OPTICAL DISK

6 7  STORAGE LAYER

6 3  SYMBOL BOUNDARY

6 2  SYMBOL

69
TRACK BOUNDARY

67a

ENLARGED VIEW OF
AREA B

WRITE BEAM SCAN

68
TRACK

6 4  WRITE BEAM SPOT

( b )  IN-SYMBOL REFRACTIVE INDEX
DISTRIBUTION

69  TRACK BOUNDARY

6 3 SYMBOL BOUNDARY

69  TRACK BOUNDARY

6 3  SYMBOL BOUNDARY

## FIG. 7

101 WRITE INFORMATION DATA

91 TURBO CODE MODULATOR

92

93 ORTHOGONAL FREQUENCY DIVISION MODULATOR

94

95

96 REFRACTIVE INDEX PATTERN CALCULATOR

97

98 WRITE PULSE INTENSITY CALCULATOR

99

100

110 PULSE LASER DRIVER

111

112

113

114

116

117

118

119

120

117

115

READ INFORMATION DATA

104

133 TURBO CODE DEMODULATOR

132

131 ORTHOGONAL FREQUENCY DIVISION DEMODULATOR

130

129
128

READ CIRCUIT

SAMPLE CLOCK 134

WRITE CLOCK 135

122

125

123

121

SERVO CIRCUIT

124

126

127

103

## FIG.8

(a) BINARY DATA
{ (0 1 1 0 0 1) 、 (0 ··· 1) 、 (1 1 0 0 0 1) }
◄───────── 6 BITS×9 SUB-CHANNELS＝54 BITS ─────────►

Modulate

(b) SUB-CHANNEL SIGNAL

◄──────────────── ONE SYMBOL LENGTH ────────────────►

1

2
·
·
·

+

+

9

＝

(c) ORTHOGONAL FREQUENCY DIVISION MULTIPLEXED SIGNAL

2.0%

1.5%

1.0%

Write Compensation

(d) WRITE SIGNAL

1
0.9
0.8
0.7
0.6
0.5
0.4
0.3
0.2
0.1
0

Write

(e) IN-SYMBOL REFRACTIVE INDEX DISTRIBUTION

71 WRITE BEAM SPOT

69 TRACK BOUNDARY

WRITE BEAM SCAN

68 TRACK

72 SYMBOL BOUNDARY

72 SYMBOL BOUNDARY

## *FIG.9*

WRITE BEAM PULSE TIMING

HALF-VALUE
REACTION WIDTH OF
WRITE BEAM

8 4
EMISSION INTERVAL

8 3
TRACK CENTER

8 1
WRITE BEAM PULSE

8 2
WRITE SIGNAL

BEAM'S MAXIMUM INTENSITY
(MAXIMUM RATIO OF TWO-PHOTON ABSORPTION
RECORDING=100%)

1. 0

8 1
WRITE BEAM PULSE

BEAM INTENSITY

ON-TRACK LOCATION

SUPERPOSED WRITE LASER BEAM PULSES

## FIG.10A

## FIG.10B

*FIG.11A*

*FIG.11B*

## FIG.12

MAGNITUDE OF WRITE
COMPENSATION TO MAKE

READ SIGNAL (ARBITRARY UNIT)

| | READ SIGNAL WAVEFORM OF NONLINEAR RECORDING SHOWN IN FIG. 11B | | READ SIGNAL WAVEFORM OF LINEAR RECORDING SHOWN IN FIG. 10B |
|---|---|---|---|
| —————— | | - - - - - - - | |

*FIG.13*

NORMALIZED
BEAM POWER

g[k][0]g[k][1]g[k][2]・・・g[k][40]

・・・ g[k][293] g[k][294] g[k][295]

*FIG.14*

NORMALIZED READ BEAM INTENSITY

0th BEAM    kth BEAM    . . . . . . . . . . . .    255th BEAM

1.0

0.5

0.0

SAMPLE POINT

SAMPLE POINT L

256 SAMPLES

20 SAMPLES (CORRESPONDING TO BEAM RADIUS)

⊗ CONVOLUTION

20 SAMPLES (CORRESPONDING TO BEAM RADIUS)

TRACK CENTER

Rf[0] Rf[1] · · · · · · · · · · · · · · · · · · · · · · · · · · Rf[294] Rf[295]

‖

2.0%

1.5%

1.0%

Plysg[20] Plysg[22] · · · · · · Plysg[274] Plysg[275]

Plysg[0]~
Plysg[19]=0

Plysg[276]~
Plysg[295]=0

*FIG.15*

## FIG.16A

NORMALIZED BEAM INTENSITY

BEAM INTENSITY DISTRIBUTION WITH PEAK INTENSITY OF 1.0

1.0
0.5
0.0

g[k][0]g[k][1]···g[k][40]···g[k][295]

NORMALIZED BEAM INTENSITY

BEAM INTENSITY DISTRIBUTION WITH PEAK INTENSITY A[k]

1.0
0.5
0.0

A[k]

A[k]g[k][0]
A[k]g[k][1]
A[k]g[k][2]
A[k]g[k][3]

A[k]g[k][40]

## FIG.16B

NORMALIZED BEAM INTENSITY

0th BEAM

kth BEAM

1.0
0.5
0.0

····
····

·········
·········

SAMPLE POINT

SAMPLE POINT L

255th BEAM

256 SAMPLES

20 SAMPLES
(CORRESPONDING TO BEAM RADIUS)

20 SAMPLES
(CORRESPONDING TO BEAM RADIUS)

44

## *FIG.17*

$$B[k]=\begin{bmatrix}1 & & & & & & & \\ & 1 & & & & & & \\ & & \ddots & & & & O & \\ & & & 1 & & & & \\ & & & & 1-(A[k]g[0])^2 & & & \\ & & & & 1-(A[k]g[1])^2 & & & \\ & & & & & \ddots & & \\ & & & & 1-(A[k]g[39])^2 & & & \\ & & & & 1-(A[k]g[40])^2 & & & \\ & & & & & & 1 & \\ & O & & & & & \ddots & \\ & & & & & & & 1 \\ & & & & & & & & 1\end{bmatrix}$$

*FIG.18A*

$$\begin{bmatrix} N[k][0] & N[k][1] & \cdots\cdots & N[k][295] \end{bmatrix} =$$

BEAM
INTENSITY
DISTRIBUTION

$$\begin{bmatrix} N[k-1][0] & N[k-1][1] & \cdots\cdots & N[k-1][295] \end{bmatrix} \times$$

$$\begin{bmatrix} 1 & & & & & & & & \\ & 1 & & & & & & & \\ & & \ddots & & & & & & \\ & & & 1 & & & & & \\ & & & & 1-(A[k]\,g[k][20])^2 & & & & \\ & & & & 1-(A[k]\,g[k][21])^2 & & & & \\ & & & & & \ddots & & & \\ & & & & & 1-(A[k]\,g[k][59])^2 & & & \\ & & & & & & 1-(A[k]\,g[k][60])^2 & & \\ & & & & & & & \ddots & \\ 0 & & & & & & & & 1 \\ & & & & & & & & & 1 \end{bmatrix}$$

*FIG.18B*

REFRACTIVE INDEX DISTRIBUTION AFTER 256 BEAMS
HAVE BEEN RADIATED

$$\begin{bmatrix} N[255][0] & N[255][1] & \cdots\cdots & N[255][295] \end{bmatrix} =$$

$$\begin{bmatrix} N[0][0] & N[0][1] & \cdots\cdots & N[0][295] \end{bmatrix}$$

$$\times B[0] \times B[1] \times \cdots \times B[255]$$

REFRACTIVE INDEX DISTRIBUTION
WHEN NO BEAMS ARE RADIATED YET

PRODUCT OF BEAM MATRICES
OF 256 BEAMS RADIATED

*FIG.19*

BEAM INTENSITY MATRIX

$$B[0] \times B[1] \times \cdots \times B[255]=$$

$$
\begin{bmatrix}
1-A[0]g[0][0]^2 & & & & & & \\
(1-A[0]g[0][1]^2)*(1-A[1]g[1][1]^2) & & & & & & \\
\quad (1-A[0]g[0][2]^2)*(1-A[1]g[1][2]^2)*(1-A[2]g[2][2]^2) & & & & & \\
\quad\quad \Pi_{k=0}^{20}1-A[k]g[k][20]^2 & & & & O \\
\quad\quad\quad \Pi_{k=0}^{21}1-A[k]g[k][21]^2 & & & & \\
\quad\quad\quad\quad \Pi_{k=0}^{39}1-A[k]g[k][39]^2 & & & \\
\quad\quad\quad\quad\quad \Pi_{k=0}^{40}1-A[k]g[k][40]^2 & & \\
\quad\quad\quad\quad\quad\quad \Pi_{k=1}^{41}1-A[k]g[k][41]^2 & \\
\quad\quad\quad\quad\quad\quad\quad \Pi_{k=2}^{42}1-A[k]g[k][42]^2 \\
& & & \\
O & \Pi_{k=214}^{254}1-A[k]g[k][254]^2 \\
& \quad \Pi_{k=215}^{255}1-A[k]g[k][255]^2 \\
& \quad\quad \Pi_{k=216}^{255}1-A[k]g[k][256]^2 \\
& \quad\quad\quad \Pi_{k=217}^{255}1-A[k]g[k][257]^2 \\
(1-A[255]g[255][293]^2)*(1-A[254]g[254][293]^2)*(1-A[253]g[253][293]^2) \\
\quad (1-A[255]g[255][294]^2)*(1-A[254]g[254][294]^2) \\
\quad\quad 1-A[255]g[255][295]^2 \\
\end{bmatrix}
$$

## FIG.20A

## FIG.20B

# FIG.20C

| TARGET STATE | ORIGINAL STATE | | | | | | | | | | | | | | | |
|---|---|---|---|---|---|---|---|---|---|---|---|---|---|---|---|---|
| | | 00 | 02 | 04 | 06 | 08 | 0a | 0c | 0e | 10 | 12 | 14 | 16 | 18 | 1a | 1c | 1e |
| 00 | F00 | F10 | F08 | F18 | F04 | F14 | F0C | F1C | F02 | F12 | F0A | F1A | F06 | F16 | F0E | F1E |
| 01 | F10 | F00 | F18 | F08 | F14 | F04 | F1C | F0C | F12 | F02 | F1A | F0A | F16 | F06 | F1E | F0E |
| 02 | F08 | F18 | F00 | F10 | F0C | F1C | F04 | F14 | F0A | F1A | F02 | F12 | F0E | F1E | F06 | F16 |
| 03 | F18 | F08 | F10 | F00 | F1C | F0C | F14 | F04 | F1A | F0A | F12 | F02 | F1E | F0E | F16 | F06 |
| 04 | F04 | F14 | F0C | F1C | F00 | F10 | F08 | F18 | F06 | F16 | F0E | F1E | F02 | F12 | F0A | F1A |
| 05 | F14 | F04 | F1C | F0C | F10 | F00 | F18 | F08 | F16 | F06 | F1E | F0E | F12 | F02 | F1A | F0A |
| 06 | F0C | F1C | F04 | F14 | F08 | F18 | F00 | F10 | F0E | F1E | F06 | F16 | F0A | F1A | F02 | F12 |
| 07 | F1C | F0C | F14 | F04 | F18 | F08 | F10 | F00 | F1E | F0E | F16 | F06 | F1A | F0A | F12 | F02 |
| 08 | F02 | F12 | F0A | F1A | F06 | F16 | F0E | F1E | F00 | F10 | F08 | F18 | F04 | F14 | F0C | F1C |
| 09 | F12 | F02 | F1A | F0A | F16 | F06 | F1E | F0E | F10 | F00 | F18 | F08 | F14 | F04 | F1C | F0C |
| 0a | F0A | F1A | F02 | F12 | F0E | F1E | F06 | F16 | F08 | F18 | F00 | F10 | F0C | F1C | F04 | F14 |
| 0b | F1A | F0A | F12 | F02 | F1E | F0E | F16 | F06 | F18 | F08 | F10 | F00 | F1C | F0C | F14 | F04 |
| 0c | F06 | F16 | F0E | F1E | F02 | F12 | F0A | F1A | F04 | F14 | F0C | F1C | F00 | F10 | F08 | F18 |
| 0d | F16 | F06 | F1E | F0E | F12 | F02 | F1A | F0A | F14 | F04 | F1C | F0C | F10 | F00 | F18 | F08 |
| 0e | F0E | F1E | F06 | F16 | F0A | F1A | F02 | F12 | F0C | F1C | F04 | F14 | F08 | F18 | F00 | F10 |
| 0f | F1E | F0E | F16 | F06 | F1A | F0A | F12 | F02 | F1C | F0C | F14 | F04 | F18 | F08 | F10 | F00 |

| TARGET STATE | ORIGINAL STATE | | | | | | | | | | | | | | | |
|---|---|---|---|---|---|---|---|---|---|---|---|---|---|---|---|---|
| | | 01 | 03 | 05 | 07 | 09 | 0b | 0d | 0f | 11 | 13 | 15 | 17 | 19 | 1b | 1d | 1f |
| 10 | F01 | F11 | F09 | F19 | F05 | F15 | F0D | F1D | F03 | F13 | F0B | F1B | F07 | F17 | F0F | F1F |
| 11 | F11 | F01 | F19 | F09 | F15 | F05 | F1D | F0D | F13 | F03 | F1B | F0B | F17 | F07 | F1F | F0F |
| 12 | F09 | F19 | F01 | F11 | F0D | F1D | F05 | F15 | F0B | F1B | F03 | F13 | F0F | F1F | F07 | F17 |
| 13 | F19 | F09 | F11 | F01 | F1D | F0D | F15 | F05 | F1B | F0B | F13 | F03 | F1F | F0F | F17 | F07 |
| 14 | F05 | F15 | F0D | F1D | F01 | F11 | F09 | F19 | F07 | F17 | F0F | F1F | F03 | F13 | F0B | F1B |
| 15 | F15 | F05 | F1D | F0D | F11 | F01 | F19 | F09 | F17 | F07 | F1F | F0F | F13 | F03 | F1B | F0B |
| 16 | F0D | F1D | F05 | F15 | F09 | F19 | F01 | F11 | F0F | F1F | F07 | F17 | F0B | F1B | F03 | F13 |
| 17 | F1D | F0D | F15 | F05 | F19 | F09 | F11 | F01 | F1F | F0F | F17 | F07 | F1B | F0B | F13 | F03 |
| 18 | F03 | F13 | F0B | F1B | F07 | F17 | F0F | F1F | F01 | F11 | F09 | F19 | F05 | F15 | F0D | F1D |
| 19 | F13 | F03 | F1B | F0B | F17 | F07 | F1F | F0F | F11 | F01 | F19 | F09 | F15 | F05 | F1D | F0D |
| 1a | F0B | F1B | F03 | F13 | F0F | F1F | F07 | F17 | F09 | F19 | F01 | F11 | F0D | F1D | F05 | F15 |
| 1b | F1B | F0B | F13 | F03 | F1F | F0F | F17 | F07 | F19 | F09 | F11 | F01 | F1D | F0D | F15 | F05 |
| 1c | F07 | F17 | F0F | F1F | F03 | F13 | F0B | F1B | F05 | F15 | F0D | F1D | F01 | F11 | F09 | F19 |
| 1d | F17 | F07 | F1F | F0F | F13 | F03 | F1B | F0B | F15 | F05 | F1D | F0D | F11 | F01 | F19 | F09 |
| 1e | F0F | F1F | F07 | F17 | F0B | F1B | F03 | F13 | F0D | F1D | F05 | F15 | F09 | F19 | F01 | F11 |
| 1f | F1F | F0F | F17 | F07 | F1B | F0B | F13 | F03 | F1D | F0D | F15 | F05 | F19 | F09 | F11 | F01 |

EP 1 814 111 A1

EP 1 814 111 A1

**FIG.21A**

93

TURBO CODE MODULATED SIGNAL 92

230 SUB-CHANNEL DATA DISTRIBUTOR

FREQUENCY f1 SUB-CHANNEL ENCODER 232

FREQUENCY f2 SUB-CHANNEL ENCODER 233

FREQUENCY f3 SUB-CHANNEL ENCODER 234

FREQUENCY f4 SUB-CHANNEL ENCODER 235

FREQUENCY f5 SUB-CHANNEL ENCODER 236

FREQUENCY f6 SUB-CHANNEL ENCODER 237

FREQUENCY f7 SUB-CHANNEL ENCODER 238

FREQUENCY f8 SUB-CHANNEL ENCODER 239

FREQUENCY f9 SUB-CHANNEL ENCODER 240

231 ADDER

ORTHOGONAL FREQUENCY DIVISION MODULATED SIGNAL 94

WRITE CLOCK

*FIG.21B*

F07

00111

*FIG.21C*

F17

10111

*FIG.22*

96

241

ORTHOGONAL
FREQUENCY
DIVISION
MODULATED
SIGNAL 94

SELECTOR

242

SYMBOL
MODULATED
DATA MEMORY

243

SELECTOR

244

REFRACTIVE
INDEX SIGNAL 97

SYMBOL
MODULATED
DATA MEMORY

242

247

STORAGE
ADDRESS/
CALCULATED
ADDRESS
GENERATOR

FLOATING
POINT SUM OF
PRODUCTS
CALCULATOR

246

ARITHMETIC
CONTROLLER

245

GAUSSIAN
BEAM INVERSE
MATRIX TABLE

EP 1 814 111 A1

## FIG.23A

REFRACTIVE INDEX
SIGNAL 97

ORTHOGONAL
FREQUENCY DIVISION
MODULATED SIGNAL
25I

251 — S

S

253 — +

25E

25E — +

254

252 — REFRACTIVE
INDEX DATA
MEMORY

252 — REFRACTIVE
INDEX DATA
MEMORY

254 255 — S

WRITE SIGNAL
DATA MEMORY

254 — S

WRITE SIGNAL
DATA MEMORY

255

256 — S

258 — fk CALCULATOR

$\Delta A[k]$
ADDER

257 — S

25A

CALCULATION
CONVERGED
STATUS

25H — CONVERGENCE
DECISION
CIRCUIT

R

259

25A

25B — fk
MEMORY

25A

$\alpha k$
MEMORY

25C

98

WRITE SIGNAL
99

25D — LU
DECOMPOSER

CALCULATION
ENDED STATUS

WRITE
COMPENSATION
FIXED SIGNAL 25F

CALCULATION
ENDED STATUS

CALCULATION
CONVERGED
STATUS

25G — SEQUENCE
CONTROLLER

MEMORY ADDRESS SIGNAL
MEMORY CONTROL SIGNAL
SELECTOR SIGNAL

( R : REGISTER   + : ADDER   − : SUBTRACTOR   S : SELECTOR )

EP 1 814 111 A1

## FIG.23B

ASYMPTOTIC WRITE SIGNAL

291 MULTIPLIER

294 ADDER

295 SUBTRACTOR

296 MULTIPLIER

297 MULTIPLIER

293 GAUSSIAN BEAM INTENSITY DISTRIBUTION TABLE

292 1.0 DATA TABLE

298 S

299 R

258

REFRACTIVE INDEX SIGNAL

SUBTRACTOR

fi[A[k]]
fi[A[k]+△A[k]]

29A

## FIG.24

( a ) IN-SYMBOL REFRACTIVE INDEX DISTRIBUTION

68
TRACK

72 SYMBOL BOUNDARY  69  TRACK BOUNDARY

69 TRACK BOUNDARY

72  SYMBOL BOUNDARY

76  READ BEAM SPOT

READ BEAM SCAN

ONE SYMBOL LENGTH

SYMBOL

READ

( b )READ SIGNAL WAVEFORM

READ SIGNAL AMPLITUDE

2.0%

1.5%

1.0%

( c ) CARRIER SIGNAL

$\bigotimes$ MULTIPLY

CARRIER SIGNALS OF RESPECTIVE SUB-CHANNELS

Demodu-late

( d ) READ BINARY DATA

{ ( 0 1 1 0 0 1 )、( 0 ··· 1 ) 、( 1 1 0 0 0 1 ) }

6 BITS × 9 SUB-CHANNELS＝54 BITS

*FIG.25*

128

ANALOG READ SIGNAL 125 → 261 ANALOG EQ → 262 A/D CONVERTER → DIGITAL READ SIGNAL129

263 TOP-OF-SYMBOL DETECTOR → TOP-OF-SYMBOL DETECTION SIGNAL 130

134

264 SAMPLE CLOCK GENERATOR → SAMPLE CLOCK SIGNAL 134

WRITE CLOCK SIGNAL135

FIG.26

FIG.27A

# FIG.27B

281,287

La(dn) or La(dk)

REFERENCE READ SIGNAL GENERATOR (IN THE ORDER OF TARGET STATES) 302

ORTHOGONAL FREQUENCY DIVISION DEMODULATED SIGNAL132

VARIANCE VALUE

EUCLIDEAN DISTANCE CALCULATOR 301

PROBABILITY CALCULATOR 303

MULTI-PLIER 30O

S 306

S 304

$\gamma$ (m, m') MEMORY (FOR ONE TURBO CODEWORD) 305

R 30N

MULTIPLIER

ADDER 30M

$\Lambda$ (dn) or $\Lambda$ (dk)

30K

S

R

ADDER 30F

30E

S 308

30H

$\beta$S(m) MEMORY (FOR ONE SYMBOL, IN THE ORDER OF TARGET STATES)

30L

S

$\beta$(m) MEMORY (FOR ONE TURBO CODEWORD) 30J

30I

30G

S

R

ADDER

307

30D

30A

S 309

$\alpha$ S(m) MEMORY (FOR ONE SYMBOL, IN THE ORDER OF ORIGINAL STATES)

30B

30C

S

$\alpha$ (m) MEMORY (FOR ONE TURBO CODEWORD)

EP 1 814 111 A1

*FIG.28A*

*FIG.28B*

EP 1 814 111 A1

## FIG.29

**1 4 3** LAST WRITE BEAM IMPULSE OF FORMER SYMBOL

**1 4 4** FIRST WRITE BEAM IMPULSE OF LATTER SYMBOL

WRITE SIGNAL INTENSITY

**1 4 1** WRITE SIGNAL

(a) WRITE SIGNAL

Read/Write Beam Scanning Direction

(b) REFRACTIVE INDEX PATTERN

READ SIGNAL INTENSITY

**1 4 2** READ SIGNAL

(c) READ SIGNAL WAVEFORM

**1 4 5** VALLEY OF CONNECTING PORTION OF READ SIGNAL

**1 4 6** FORMER SYMBOL

**1 4 7** LATTER SYMBOL

**1 4 8** CONNECTING PORTION

61

## *FIG.30*

( a ) ORTHOGONAL FREQUENCY DIVISION MULTIPLEXING RECORDING

T=BD CHANNEL BIT INTERVAL OF RLL(1,7)    $\Delta f = 1 / 256T$

ONE SYMBOL LENGTH = 2 5 6 T

CARRIER
FREQUENCY

NUMBER OF
PHASES

ZERO CROSS POINT INTERVAL 1T

1 / 2 5 6 T

5 1 2 PHASES

×

2 / 2 5 6 T

2 5 6 PHASES

×

6 3 / 2 5 6 T

8 PHASES

×

WAVELENGTH AT MAXIMUM REPETITIVE
FREQUENCY = 4T OR MORE

6 4 / 2 5 6 T
(=REPETITION OF 4T )

8 PHASES

5. 3 2 E 8 2
= **2 7 4** BITS

( b ) PWM RECORDING

APPROXIMATELY 1.6 TIMES

R L L ( 1 . 7 )    1 . 5 T = 1 BIT

2 5 6 T = **1 7 0** BITS

# EP 1 814 111 A1

| | INTERNATIONAL SEARCH REPORT | International application No. |
|---|---|---|
| | | PCT/JP2005/019310 |

**A. CLASSIFICATION OF SUBJECT MATTER**
*G11B7/0045*(2006.01), *G11B7/005*(2006.01), *G11B7/24*(2006.01), *G11B20/10* (2006.01)

According to International Patent Classification (IPC) or to both national classification and IPC

**B. FIELDS SEARCHED**

Minimum documentation searched (classification system followed by classification symbols)
*G11B7/0045*(2006.01), *G11B7/005*(2006.01), *G11B7/24*(2006.01), *G11B20/10* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 5-197955 A (Pioneer Electronic Corp.), 06 August, 1993 (06.08.93), Full text; Figs. 1 to 9 & US 5283777 A1 & EP 0511023 A1 | 1-23 |
| A | JP 2001-236644 A (Central Glass Co., Ltd.), 31 August, 2001 (31.08.01), Full text; Fig. 1 (Family: none) | 1-23 |
| E,X | JP 2005-322325 A (Ricoh Co., Ltd.), 17 November, 2005 (17.11.05), Full text; Figs. 1 to 12 (Family: none) | 22 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 03 February, 2006 (03.02.06) | 14 February, 2006 (14.02.06) |

| Name and mailing address of the ISA/ Japanese Patent Office | Authorized officer |
|---|---|
| Facsimile No. | Telephone No. |

Form PCT/ISA/210 (second sheet) (April 2005)

## INTERNATIONAL SEARCH REPORT

| International application No. |
|---|
| PCT/JP2005/019310 |

**Box No. II**      Observations where certain claims were found unsearchable (Continuation of item 2 of first sheet)

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**      Observations where unity of invention is lacking (Continuation of item 3 of first sheet)

This International Searching Authority found multiple inventions in this international application, as follows:
     The inventions of claims 1-17 relate to that a plurality of pulse beams are applied to a recording layer whose optical constant is continuously changed according to the total of the light amount applied, at an interval shorter than the diameter of the pulse beam on the recording layer; and a recoding signal is generated so that each total of change amount of optical constant at each position on the recording layer where the pulse beam is applied until the recording end becomes equal to a predetermined change amount pattern.

     (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2005/019310 |

Continuation of Box No.III of continuation of first sheet(2)

The inventions of claims 18-21 relate to a device for reproducing information from an information recording medium where information is recorded according to the signal in which a plurality of sub-channel signals are combined, onto a recording layer whose optical constant is continuously changed according to the total of the light amount applied, the device including a demodulation unit for multiplying the reproduction signal by carrier signals so as to generate a plurality of sub-channel signals corresponding to the carrier signals and detecting information according to the sub-channel signals.

The inventions of claims 22-23 relate to an information recording medium in which information is recorded in a symbol unit of a predetermined length onto a recording layer, wherein the area corresponding to an inter-symbol portion of the recording layer includes a non-recording area where no information is recorded.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11316951 A

- US 20040125732 A

### Non-patent literature cited in the description

- **H. OGIWARA ; M. YANO.** Improvement of Turbo Trellis-Coded Modulation System. *IEICE Trans. Fundamentals,* 1998, vol. E-81-A, 2040-2046

- **G. UNGERBOECK.** Channel Coding with Multilevel/Phase Signals. *IEEE Trans. Inform. Theory,* January 1982, vol. IT-28 (1), 55-67